# EUROPEAN PATENT SPECIFICATION

(11) **EP 4 192 917 B1**
(45) Date of publication and mention of the grant of the patent: **18.12.2024**
(21) Application number: 21783056.1
(22) Date of filing: 09.08.2021
(51) Int. Cl.: C09D 5/18, C09D 5/02, C09D 7/40, C09D 7/61, C09K 21/02, C08K 3/22, C09D 7/65, C09K 21/14, C09D 7/45, C09D 7/80, B05D 7/08, C09D 201/00, C08L 101/04

(54) **FLAME RETARDANT FORMULATIONS FOR WOOD COATING**
FLAMMHEMMENDE FORMULIERUNGEN ZUR HOLZBESCHICHTUNG
FORMULATIONS IGNIFUGES POUR REVÊTEMENT DE BOIS

(30) Priority: 10.08.2020 US 202063063440 P
(43) Date of publication of application: 14.06.2023
(73) Proprietor: Bromine Compounds Ltd., 8410101 Beer-Sheva (IL)
(72) Inventor: ABECASSIS WOLFOVICH, Meyrav, 8502500 Meitar (IL); SWISSA, Smadar, 8502500 Meitar (IL); LISON, Jakub, Hoffman Estates, Illinois 60169 (US); ALESSIO, Gerald R., Norwood, New Jersey 07648 (US)
(74) Representative: Potter Clarkson
(86) International application number: PCT/IL2021/050972
(87) International publication number: WO 2022/034585

(56) References cited:
- WO-A1-2015/157278
- WO-A1-2021/105034
- WO-A2-2014/014648
- CN-A- 104 629 607
- US-A1- 2018 298 229
- US-B2- 10 626 289

## Description

One major type of coating for wood products consists of water-based acrylic resins, i.e., a coating formulation in which the resin acting as a binder is a homopolymer or a copolymer of acrylic acids, methacrylic acids or esters thereof, formulated in water. Water-based acrylic resins are useful in protecting wood products, owing to their ability to adhere to wood and form water-resistant coating. Another important type of coating in the wood coatings market includes polyurethane dispersions (i.e., water-based polyurethane resins).

Apart from the resin and water, a coating formulation may contain pigments and additives, e.g., wetting and dispersing agents, coalescing agents, defoamers and rheology modifiers. Another additive to be considered in coating formulations is a flame retarding agent. One important category of flame retardants consists of brominated flame retardants. A number of studies were reported evaluating the performance of brominated flame retardants added to water-based acrylic resin for use in the wood coatings market.

US 2015/0111052 illustrates the use of a liquid halogenated phosphate ester as a major flame retardant in acrylic coatings for wood, alongside a brominated flame retardant as a secondary component. The formulations of US 2015/0111052 further contain a flame retardant which undergoes endothermic decomposition (alumina trihydrate (ATH) or magnesium hydroxide (MDH)). The brominated flame retardants tested in US 2015/0111052 include brominated bisphenol A (used in a small amount) and brominated polyol (a liquid flame retardant). The addition of the (mostly liquids) flame retardants to the coating formulation was achieved in a straightforward manner, through pre-mixing with the acrylic dispersion. As opposed to the approach shown in US 2015/0111052, based mainly on liquid flame retardants, formulating large amounts of solid brominated flame retardants as coatings can be challenging. The approach was demonstrated in US 3,877,974 and recently in US 10,626,289, illustrating incorporation of water-insoluble solid brominated flame retardant into water based acrylic/polyurethane coating formulations. In US 10,626,289, tribromophenol end-capped brominated epoxy polymer of the formula: 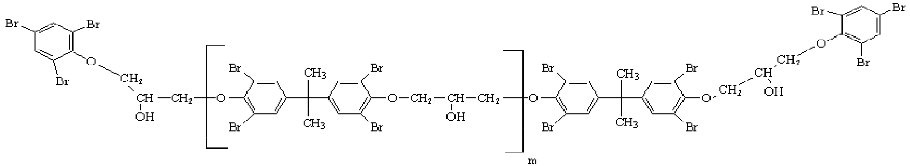 [classified as low molecular weight brominated epoxy polymer, e.g., m~ 1-5; 1000 < Molecular Weight (MW) < 5000; e.g., in a pulverised form, for example, d₅₀<5 µm, d₉₀< 10 µm and d₉₉< 30 µm, determined by laser diffraction particle size analysis] was formulated as an aqueous dispersion, which was subsequently mixed with a commercial acrylic or polyurethane resin to form a varnish formulation. The varnish was applied on wood to give transparent/translucent coatings. The coated wood samples achieved good results in flammability tests.

The action of brominated flame retardants incorporated into combustible substances is almost always augmented by metallic oxides, especially antimony oxides, which act synergistically with brominated flame retardants. Indeed, the formulations illustrated in the publications mentioned above included metallic oxide synergists. Specifically, antimony oxides were the additives of choice in both US 2015/0111052 (antimony trioxide) and US 10,626,289 (antimony pentoxide).

CN-A-104 629 607 describes a flame-retardant waterproof aqueous polyurethane coating and a preparation method thereof. The coating is prepared from the following raw materials in parts by weight: 150-200 parts of polyether polyol, 10-20 parts of 2, 4-diphenyl-methane-diisocyanate, 20-30 parts of toluene diisocynate, 10-14 parts of polydimethylsiloxane, 8-10 parts of nano cerium oxide, 6-8 parts of acetic ether, 9-13 parts of alkyl phosphate salt, 7-9 parts of chlorinated paraffin, 10-12 parts of talcum powder, 8-10 parts of pentaerythritol, 3-5 parts of trimethylolpropane, 3-5 parts of stannous octoate, 6-8 parts of dibutyltin dilaurate, 2-3 parts of an antioxidant TNP, 6-8 parts of nanotitanium dioxide, 0.8-1.2 parts of dicumyl peroxide, 16-20 parts of deionized water and 8-12 parts of auxiliaries.

WO2014/014648 describes a textile comprising fiber and a brominated flame retardant that is a copolymer having copolymerized therein a butadiene moiety and a vinyl aromatic monomer moiety, the copolymer having, prior to bromination, a vinyl aromatic monomer content of from 5 to 90 percent by weight based upon copolymer weight, a 1,2-butadiene isomer content of greater than zero percent by weight based upon butadiene moiety weight, and a weight average molecular weight of at least 1000, the brominated copolymer having an unbrominated, non-aromatic double bond content of less than or equal to 50 percent based upon non-aromatic double bond content of the copolymer prior to bromination as determined by proton nuclear magnetic resonance spectroscopy, a five percent weight loss temperature, as determined by thermogravimetric analysis of at least 170 degrees Celsius.

WO2015/157278 describes a fire retardant, vapor impermeable coating composition, which is useful for protecting gypsum, wood, polyurethane, polystyrene, and other construction materials and surfaces, such as components for buildings. The composition does not require halogenated compounds and is considered environmentally friendly. The composition is provided in the form of a liquid-applicable aqueous latex comprising at least one latex polymer and an expandable graphite, optionally a hydrophobic thickener, and optionally other fire retardants such as metal hydroxides, wherein the polymer is selected such that the composition, when coated onto a substrate and allowed to dry, has a vapor permeability not exceeding one perm (5.70×10⁻⁸ g/Pa.s.m² when tested according to ASTM E96B-10 at an average dry film thickness of 40 mils). The invention provides fire retardant air barrier layers for construction materials, such as polyurethane or polystyrene insulation beads or panels, as well as vapor impermeable laminates for construction applications.

We have now studied the combustion performance of wood products coated with formulations based on the varnish described in US 10, 626,289. Coatings were evaluated according to the Single Burning Item (SBI) test set out in EN 13823, which measures the rates of heat and smoke release produced by a test specimen which consists of two vertically positioned rectangular wood boards (1500mm × 1000mm and 1500mm × 500mm), joined perpendicularly along their equal side to create a 90° corner. The test evaluates the performance of a product placed in a small room, under exposure to a flame produced by a single ignition source located adjacent to the test product (for example, to simulate a waste-paper basket in a corner of the room). Parameters measured by the SBI test include the fire growth rate index; the total heat release over the first ten minutes after the ignition of the burner; the smoke growth rate index; and the total smoke production over the first ten minutes after burner ignition.

The coating formulation of US 10,626,289 that was subjected to the SBI test is designated herein BER/APO (BER stands for the low molecular weight brominated epoxy resin flame retardant with the chemical structure depicted above, APO stands for the antimony pentoxide synergist). In addition, we also tested a ternary formulation, which included a combination of the low-molecular weight brominated epoxy polymer, antimony pentoxide and magnesium hydroxide (designated BER/APO/Mg(OH)₂). The ternary system showed some improvement over the basic coating formulation BER/APO of US 10,626,289. However, much to our surprise, antimony oxide-free water-based acrylic coating comprising the low-molecular weight brominated epoxy polymer and magnesium hydroxide (designated herein BER/Mg(OH)₂) performed consistently better than all the other coatings evaluated in the study.

Apart from the SBI test mentioned above, in which the flammability of coated (flame retarded) medium density fiberboard (MDF) samples was studied, we used a cone calorimeter test (a small-scale test) to examine the burning properties of coated pine wood samples. The trend observed in the SBI and cone calorimeter tests for the two types of wood was the same: the antimony oxide-free coating, based on BER/Mg(OH)₂, was more efficient than the coating which was flame retarded by the ternary, antimony oxide containing combination BER/APO/Mg(OH)₂.

The cone calorimeter test served us to evaluate different brominated flame retardants (in particular brominated polymeric flame retardants), formulated with either Mg(OH)₂(MDH) or Al(OH)₃(ATH) in acrylate and polyurethane based coatings. In the cone calorimeter test, radiant heat is projected onto a sample before ignition and during the burning of the sample, and several parameters, especially parameters related to the heat release profile of the tested sample, are measured. An effective flame retardant system should exhibit low values of peak and average heat release rate (HRR) and the lowest maximum average rate of heat emission (MARHE). The experimental work conducted in support of this invention shows that in the coating systems described herein, MDH and ATH can offset the exclusion of antimony oxide, e.g., antimony pentoxide. That is, the efficiency of combinations consisting of brominated polymeric flame retardant/MDH (or ATH) and brominated polymeric flame retardant/APO were found to be at least comparable, across the range of brominated polymeric flame retardant tested by us. Because the common practice of using antimony oxide synergist alongside brominated flame retardants may be objected to due to environmental considerations, the substitution of APO by MDH or ATH is highly desired.

Accordingly, the present invention provides a flame retardant coating formulation in the form of an aqueous dispersion comprising a binder according to claim 1, a process for preparing a flame retardant coating formulation for wood according to claim 13 and a method of reducing the flammability of wood and wood products according to claim 18.

A brominated polymeric flame retardant may be represented by formula (I): 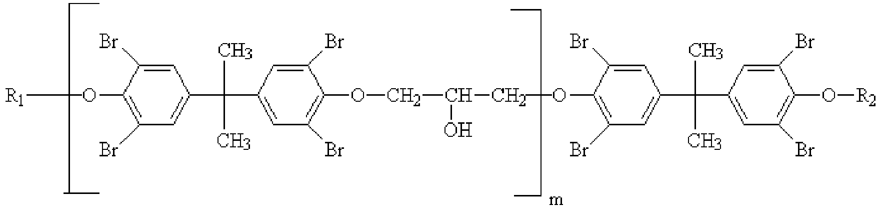
(m=degree of polymerization);
wherein R₁ and R₂ are independently selected from the group consisting of the following:

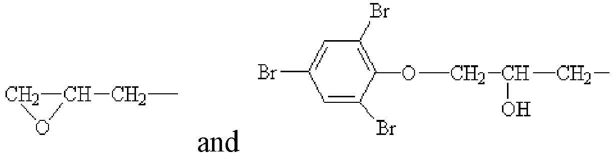

Preferred are tribromophenol end-capped brominated epoxy polymers of the formula IA: 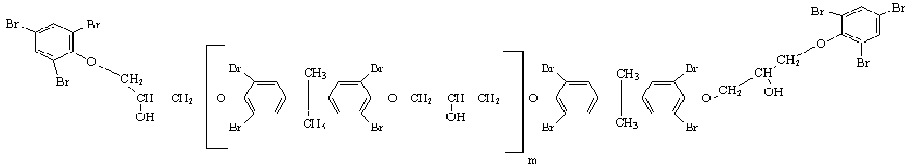 specifically a low-molecular weight type resin, e.g., with 1000 < MW < 5000, e.g., 1500 ≤ MW < 2500 (m~1-5).

A brominated polyacrylate, e.g., poly (pentabromobenzyl acrylate), may be represented by formula II: 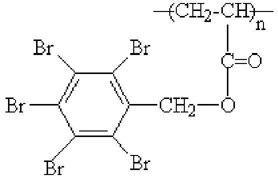 (n=degree of polymerization)

The polymer (abbreviated PBBPA) is produced by polymerizing the corresponding monomer pentabromobenzyl acrylate, either in bulk (in an extruder at a temperature in the range from 120°C to 290°C as described in US 4,996,276), or in solution, see US 4,128,709, US 6,028,156 and US 9,018,324. The polymer is also available on the market, being sold by ICL-IP (FR-1025).

A brominated polystyrene, may be represented by formula III: 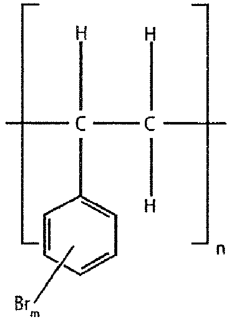 (n=degree of polymerization; m= 1, 2, 3, 4 or 5).

The polymer is prepared by methods known in the art (see US 4,879, 353 and US 5,532,322). Suitable grades have weight average molecular weight in the range of about 500,000-600,000, with bromine content preferably exceeding 60 or even 65 % by weight (that is, average of 2-3 bromine atoms per aromatic ring in the polymer backbone chain). Such polymers, in the form of a free-flowing powder, are available on the market, e.g., from ICL-IP (FR 803P).

Brominated poly[styrene-co-butadiene], e.g., brominated polystyrene-block-polybutadiene-block-polystyrene, is shown below (Formula IV): 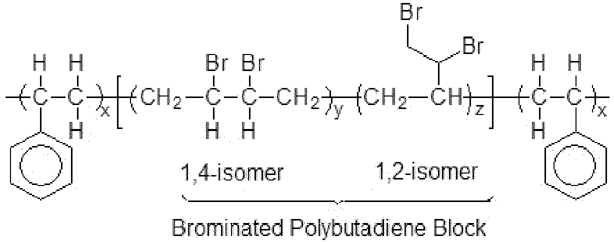 where x, y and z indicate the numbers of the three types of repeat units, respectively. Such brominated products, in particular, polystyrene-block-brominated polybutadiene-block-polystyrene, are commercially available (e.g., FR-122P from ICL-IP).

Combinations of brominated nonpolymeric flame retardants with MDH were found to be less efficient than the corresponding combinations with APO. That is, MDH is not as effective as APO in coating formulations that are flame retarded by "small" brominated compounds, such as decabromodiphenyl ethane (abbreviated DPDPE; available commercially as FR-1410 from ICL-IP). These "small" brominated compounds lean heavily on the presence of APO in coating formulations, as shown by the results reported below.

Hereinafter, a brominated polymeric flame retardant is abbreviated BFR. The preferred flame retardant, namely, the end-capped brominated epoxy polymer of Formula Ia, is abbreviated BER. Preferred coating formulations of the invention comprise:
from 10 to 50 % by weight of water, e.g., 20 (or 25) to 45 %;
from 10 to 35 % by weight of binder, e.g., 15 (or 20) to 30 %;
from 5 to 25 % by weight of BFR; e.g., 8 (or 10) to 20 %; and
from 2 to 10 % by weight of Mg(OH)₂ or Al(OH)₃ e.g., 3 to 7 %.

The formulation further contains customary coating additives. Major types of additives may include:
one or more dispersants (usually from 0.1 to 5.0 % by weight each, e.g., 0.1 to 3.0 % by weight each);
one or more wetting agents (usually from 0.1 to 5.0 % by weight each, e.g., 0.1 to 1.5 % by weight each);
one or more substrate wetting agents (usually from 0.1 to 5.0 % by weight each, e.g., from 0.1 to 1.5 % by weight each);
coalescing agents (usually from 5.0 up to 15 - 20 % by weight each);
one or more defoamers (usually from 0.1 to 15.0 % by weight each, e.g., from 0.1 to 5.0 % by weight each (0.1 to 1.5 %);
   and
one or more rheology modifiers (usually from 0.1 to 5.0 % by weight each, e.g., from 0.1 to 3.0 % each).

Weight concentrations are based upon total formulation, unless indicated otherwise.

The composition of the invention is substantially free of Sb₂O₃ or Sb₂O₅. By "substantially free" is meant that the concentration of the synergist (e.g., antimony trioxide or antimony pentoxide) in the composition is well below the acceptable amount used in conjunction with brominated additives in coating formulations for wood products, e.g., not more than 3 % by weight, more preferably, less than 1.0 % by weight, e.g., up to 0.9 % and even more preferably from 0.0 to 0.09 % by weight (based on the total weight of the composition). Most preferably, the compositions of the invention are totally devoid of metal oxide synergists.

The coating formulation may be prepared in two steps. In the first step, the solid flame retardants [BFR and Mg(OH)₂ or Al(OH)₃] are dispersed in water to form a homogeneous FR dispersion (FR is an abbreviation of flame retardant). In the second step, the FR aqueous dispersion, containing BFR and Mg(OH)₂ or Al(OH)₃ is combined with a water-based (e.g., acrylate or polyurethane) resin.

To incorporate the pair of solid flame retardants into water, it is more convenient to start with the magnesium hydroxide powder and then continue with the BFR powder, because their processing may require different conditions. Suitable grades of magnesium hydroxide consist of micron or submicron particles (for example, with the particle size distribution of d₅₀ ≤ 5 µm (e.g., d₅₀ ≤ 3 µm, more preferably d₅₀ ≤ 2 µm) and d₉₀ ≤ 10 µm (e.g., d₉₀ ≤ 6 µm, more preferably or d₉₀ ≤ 4 µm), measured by laser diffraction, e.g., by Malvern Mastersizer 2000 using isopropanol. Commercial products suitable for use include FR-20-100 from ICL-IP, such as the grade named FR-20-100-S10. Suitable aluminum trihydrate exhibits average median particle diameter from 7 to 10 µm and BET surface area from 1 to 3 m²/g, such as SB-432 from HUBER with the average median particle diameter of 9 µm and BET surface area of 2 m²/g. The description that follows relates to formulating Mg(OH)₂ with BFR in water-based acrylic coatings. The description, however, applies equally to Al(OH)₃ instead of Mg(OH)₂ unless otherwise specifically indicated.

The Mg(OH)₂ powder may be added to a vessel that was previously charged with water, coalescing agent (e.g., to water/propylene glycol mixture, proportioned 3:1 to 1.2:1 by weight), and a dispersing agent. The wettability of magnesium hydroxide in water is fairly good, and therefore the presence of a wetting agent may not be necessary at this stage. A coalescing agent and a defoamer may also be incorporated into the water prior to the addition of the FR powders. To disperse these auxiliary additives in water (the dispersing, wetting, coalescing and defoaming agents), usually relatively low shear force is required, generated by a dissolver stirrer operating at <750 rpm. Incorporation of the magnesium hydroxide powder into the water can be achieved with the aid of a high-shear or ultra-high shear disperser, for example, revolutions per minute (rpm) of the mixing shaft is not less than 10,000, e.g., operating in a range of rotor tip speeds between 3,000 and 5,000 ft/min. The Mg(OH)₂ powder is added gradually, under a first agitation rate, say, from 7,500 to 12,500 rpm. After the addition of the total amount of magnesium hydroxide is completed, the mixture is homogenized for some time, with the high-shear disperser operating at a higher speed range, e.g., from 15,000 to 25,000 rpm.

Next, BFR is incorporated into the FR suspension. For example, a powder with particle size distribution of d₅₀<5 µm (e.g., d₅₀<4 µm) and preferably also d₉₀<12 µm (e.g., d₉₀<10 µm, d₉₀<9 µm, d₉₀<7 µm) and even more preferably also d₉₉< 40 µm (e. g., d₉₉< 35 µm, d₉₉<30 µm, d₉₉<25 µm). Suitable pulverized forms may be produced by subjecting a BFR to particle size reduction with the aid of a jet mill (dry milling) to achieve particle size distribution as set out above (measured by Malvern Mastersizer 2000 in water (3 minutes ultrasonic treatment, 500 psi, 1250 rpm)). A suitable commercially available product is TexFRon^{®} 4002 from ICL-IP (it is the BER of Formula Ia).

When the BFR has a low softening point (which is the case for the BER of Formula Ia), then its addition is not carried out under operation of a very high speed, high shear disperser as set out above for Mg(OH)₂. Rather, a lower speed instrument (e.g., low to medium, such as < 3,000 rpm, e.g., < 1,500 rpm) may be used to enable the formation of homogeneous FR dispersion. To improve its storage stability, a thickener may be added to the BFR/Mg(OH)₂ dispersion, to minimize the settling of FR's with the passage of time. However, if little time is allowed to elapse before the BFR/Mg(OH)₂ dispersion is mixed with the binder (e.g., acrylic or polyurethane) resin, then the presence of a thickener in the FR dispersion is not mandatory; the thickener can just be added to the finished coating formulation.

The weight ratios between the components of the FR suspension, namely, water, Mg(OH)₂ or Al(OH)₃, BFR, coalescing agent, dispersing agent (sometimes a single component serves a dual function of dispersant/wetting agent) and a defoamer are preferably in the ranges of 100: 20-40: 90-120: 50-75: 5-10: 1-5, respectively.

In the next step, the FR suspension is combined with a water-based binder resin (e.g., water-based acrylic or polyurethane resin).

Acrylic resin for use in the present invention usually falls into two categories (the term "acrylic", as used herein, is meant to include "methacrylic"):
pure acrylic resin (the polymerization/copolymerization product of (meth)acrylic monomers only);
complex acrylic resins (the copolymerization product of (meth)acrylic monomer(s) and non-acrylic monomers), e.g., styrene.

In both categories, the acrylic monomers structural units of the resin can be selected from alkyl acrylate and alkyl methacrylate (alkyl esters of acrylic acids or methacrylic acid), where the alkyl group is preferably C1-C5 alkyl, e.g., methyl, ethyl, propyl (e.g., n-propyl) and butyl (e.g., n-butyl). The parent acid - acrylic acid or methacrylic acid - may also be used in small amounts to provide the resin. The acrylic monomers may be optionally functionalized.

The water-based acrylic resin for use in the present invention may be provided in different forms. Two major forms are:
acrylic latex (which consists of an emulsion of acrylic resin particles in water;
film is formed after application of the coating formulation onto the wood product upon water evaporation); and
cross-linking acrylic resin formulated in water, especially self-crosslinking acrylic resins, including ambient temperature self-crosslinking acrylic resins. Self-crosslinking functionality may be achieved in different ways known in the art.

The experimental results reported below indicate that self-crosslinking acrylic copolymer formulated in water (from 40 to 60 % solid content, e.g., from 45 to 55 %) in the form of slightly alkaline dispersion available, for example, from Alberdingk Boley, is compatible with the FR dispersion and the two mixtures can be combined to form an efficient flame retardant coating formulation.

Before it is mixed with the BFR/Mg(OH)₂ dispersion to form the finished coating formulation, it is beneficial to add to the commercially available water-based acrylic resin one or more dispersing agents, a substrate wetting agent and a defoamer, e.g., in the following weight ratios 100: 1-5: 0.5-5: 1-5 (100 parts by weight of a water-based acrylic resin include the water component of the commercial resin). These additives are readily incorporated into commercial water based acrylic resins, for example with the aid of a dissolver stirrer. A dispersing agent of choice for this part of the preparation (that is, to be incorporated into the water-based acrylic resin before the addition of the FR dispersion) is an anionic dispersant, especially a salt of polyacrylic acid, e.g., sodium polyacrylate.

The FR dispersion is added to the water-based acrylic resin dispersion described immediately hereinabove, usually in 3:7 to 7:3 weight ratio, e.g., 4: 6 to 6:4, for example, roughly equal quantities of the FR dispersion and the water based acrylic resin are mixed to form a homogeneous formulation, followed by the addition of a rheology additive, e.g., which functions as a thickener and stabilizes the formulation. The density of the formulation of the invention varies from 1.10 to 1.20 kg/m³, e.g., from 1.15 to 1.17 kg/m³.

A specific process for preparing a flame retardant coating formulation for wood, according to the invention, comprises the steps of:
1a) adding magnesium hydroxide powder (e.g., with particle size distribution of d₅₀≤5 µm (e.g., d₅₀≤3 µm, more preferably d₅₀≤2 µm) and d₉₀≤10 µm (e.g., d₉₀≤6 µm, more preferably d₉₀≤4 µm), or alumina trihydrate powder (e.g., with particle size distribution of d₅₀≤10 µm) to water in the presence of a dispersant and optionally a wetting agent under high shear, to form Mg(OH)₂ or Al(OH)₃ aqueous dispersion;
1b) adding BFR powder (e.g., with particle size distribution of d₅₀≤5 µm and d₉₀≤10 µm) to the Mg(OH)₂ (or Al(OH)₃) aqueous dispersion (for example, under low to moderate shear), to form BFR/Mg(OH)₂ or BFR/Al(OH)₃ aqueous dispersion;
2) combining the BFR/Mg(OH)₂ (or the BFR/Al(OH)₃) aqueous dispersion with a water-based binder dispersion (e.g., acrylic resin, polyurethane resin) to form the flame retardant water-based coating formulation;
wherein the process further comprises incorporating one or more of dispersants, wetting agents, coalescing agents, defoamers, substrate wetting agents and rheology modifiers into the Mg(OH)₂ or Al(OH)₃ aqueous dispersion prepared in step 1a), the BFR/Mg(OH)₂ (or BFR/Al(OH)₃) aqueous dispersion prepared in step 1b), the water-based binder dispersion used in step 2) and/or the flame retardant coating formulation prepared in step 2.

The BFR/Mg(OH)₂ or BFR/Al(OH)₃ aqueous suspensions obtained in step 1b, comprising water, Mg(OH)₂ or Al(OH)₃, BFR, a coalescing agent (e.g., propylene glycol), a dispersing agent (e.g., an agent serving a dual function of dispersant/wetting agent) and a defoamer, proportioned 100 : 10-50 (e.g., 20-40) : 70-140 (e.g., 90-120) : 50-90 (e.g., 50-75) : 5-10 : 1-5, by weight, respectively, forms another aspect of the invention.

Dispersant(s) are present in the coating formulation at a concentration from 0.1 to 3.0% by weight each, based on total formulation. The use of two or more dispersants is beneficial: a first dispersing agent (e.g., nonionic) is incorporated into the water before addition of the FR powders, and is also added to the water-based binder (e.g., acrylic) resin component, together with a second dispersing agent (anionic), before the binder is combined with the FR dispersion. Polymeric dispersants are preferred, e.g., nonionic acrylate copolymer can serve as the first dispersing agent (such as DISPERBYK^{®}-2010, available in an emulsion form). A salt of polyacrylic acid (e.g., sodium polyacrylate, such as LOPON^{®} 800 from ICL) or a salt of polyphosphoric acid (e.g., sodium polyphosphate, such as Calgon^{®} N from ICL) can serve as the second dispersant (the anionic dispersant).

The good effect of a combination of nonionic and anionic surfactants as dispersing agent system on the storage stability of the formulations of the invention is shown in the experimental work reported below. Usually accelerated testing of paints/coating formulations is carried out at elevated temperature for a period of a few weeks and then the formulation is visually examined. The results indicate that in the absence of an anionic surfactant, the formulation transforms into a non-fluid mass (gel or solid). In the presence of an anionic surfactant, however, only little, temporary separation was observed at the end of the test period, as the formulation could be re-dispersed easily to restore its flowability and functionality. The ratio between the nonionic and anionic surfactants is usually in the range of 10:1 to 5:2 weight ratio, e.g., 5: 1 to 1:1.

Wetting agent(s) may be added to wet the particles of the flame retardants. Wetting agents are usually added at a concentration from 0.1 to 1.5 % by weight each based on total formulation, and include, for example nonionic surfactants such as alcohol alkoxylates and anionic surfactants such as alkyl aromatic sulfonates, e.g., sodium isopropyl naphthalene sulfonate. When used, the wetting agents are incorporated into water before addition of the FR powders. However, some dispersing agents possess the necessary wetting properties and hence a single additive can be used, such as DISPERBYK-2010.

Coalescing agents (usually added at a concentration from 5.0 to 15.0 % by weight based on total formulation) may be, for example, hydrophilic coalescing agents, e.g., propylene glycol or water-soluble alkyl ethers of propylene glycols, such as di-propylene glycol monomethyl ether. Coalescing agents are usually incorporated into water before addition of the FR powders.

Defoaming agents (usually from 0.1 to 1.5 % by weight each) may be, for example, silicone-containing defoamers, or long chain decyne diols ethoxylated derivatives. Defoamers are incorporated into water before addition of the FR powders and can be separately added to the water-based binder before it is combined with the FR dispersion.

Substrate wetting agents, to improve the wettability of the wood substrate by the coating formulation (usually from 0.1 to 1.0 % by weight each) may be, for example, polyether-modified silicone surfactants, sometimes available in solution form in glycol and/or ether solvents. A substrate wetting agent is added to the water-based binder (e.g., acrylic resin), before it is mixed with the FR dispersion to form the coating formulation.

Rheology additive (usually from 0.1 to 3.0 % by weight each), e.g., thickening and anti-settling agent, for example, liquid rheology additives such as a solution of modified urea (in N-methyl pyrrolidone), or other types, polyurethanes, polymer modified clays and acrylic emulsions. Thickeners are usually the last added component, i.e., they are incorporated into the finished formulation.

Other types of additives include preservatives, stabilizers, pH buffers, curing agents, sequestering agents, suspending agents, detergents, and of course dyes and pigments.

As mentioned above, water-based polyurethane dispersions can also benefit from the addition of the BFR/Mg(OH)₂ dispersion to offer flame retardant polyurethane-based coatings. Examples of commercial polyurethane dispersions include ALBERDINGK^{®} U9600 VP - Aliphatic polyester polyurethane dispersion and ALBERDINGK^{®} PUR MATT 970 - (aliphatic) polyurethane dispersion. Another type of aqueous dispersions used in wood coating is based on vinyl acetate copolymer dispersions, such as ALBERDINGK^{®} VA 294.

The composition of the invention can be applied to coat/paint wood (oak, pine, beech, cherry) or wood products (e.g., engineered wood) by conventional techniques, e.g., with the aid of a sprayer, a brush, a roller-coater, to achieve loading levels of about 70 g/m² to 300 g/m², e.g., from 100 g/m² to 200 g/m², to create one or more coating layers onto the wooden surface. Wood products include glulam, plywood, parallel strand lumber (PSL), oriented strand board (OSB), oriented strand lumber (OSL), laminated veneer lumber (LVL), laminated strand lumber (LSL), particleboard, medium density fiberboard (MDF), cross-laminated timber, and hardboard, as described in US 2015/0111052 and US 10,626,289. The experimental results reported below indicate that the flammability of coated MDF and pine wood was effectively reduced with the aid of the flame retardants described herein.

Preferred antimony-free coating formulations of the invention, which are flame retarded by incorporating BFR/MDH or BFR/ATH aqueous suspension into commercial water-based acrylic or polyurethane resins, and preferred additives present in such formulations, are set out in Table A.

**Table A**

| | Acrylic coating | Polyurethane coating |
|---|---|---|
| **Composition (% by weight)** | | |
| Water | 10 - 50 (20 - 45) | 10 - 50 (15 - 30) |
| Acrylic resin | 15 - 35 (20 - 30) | |
| Polyurethane resin | | 10 - 30 (10 - 20) |
| Polymeric brominated flame retardant (such as brominated epoxy resin; brominated polystyrene-*block*-polybutadiene-*block*-polystyrene; brominated polystyrene | 5 - 25 (8 - 20) | 5 - 25 (8 - 20) |
| MDH or ATH | 2 - 10 (3 - 7) | 2 - 10 (3 - 7) |
| Nonionic dispersing agent (e.g., nonionic acrylate copolymer | 0.1 - 5.0 (0.1 - 3.5) | 0.1 - 5.0 (0.1 - 3.5) |
| Anionic dispersing agent (e.g., polyacrylate or polyphosphate sodium salt) | 0.1 - 1.5 (0.1 - 1.0) | 0.1 - 1.5 (0.1 - 1.0) |
| Substrate wetting agent | 0.1 - 5 (0.1 - 1.5) | 0.1 - 5 (0.1 - 1.5) |
| Defoamer | 0.2 - 2.5 (0.5 - 1.5) | 0.2 - 2.5 (0.5 - 1.5) |
| Rheology additive | 0.1 - 5 (0.1 - 3) | 0.1 - 5 (0.1 - 3) |
| Coalescing Agent (e.g., propylene glycol) | 5 - 20 (0.1 - 15) | 5 - 20 (0.1 - 15) |
| Substrate wetting agent | 0.1 - 5 ( 0.1 - 1.5) | 0.1-5 ( 0.1 - 1.5) |
| Wetting agent | 0.1 - 5 ( 0.1 - 1.5) | 0.1 - 5 ( 0.1 - 1.5) |

A coating created by the formulation of the invention may be transparent (i.e., the texture and/or the wooden color can still be easily observed in the final coated wooden substrate) or translucent, (i.e., the wooden color can be seen through the coating of the invention to some extent, while giving rise to a coated substrate having a mat finishing). The transparency of the film of the invention can be measured using DATACOLOR 650. The transparent film of the invention is characterized by having transparency values of between 30 % and 90 % as measured by DATACOLOR 650, e.g., 40 %-80%, for example, 55% -80% as measured by DATACOLOR 650.

Also described are nonpolymeric brominated flame retardants which could benefit from the replacement of antimony oxide by magnesium hydroxide in coating formulations, such as Tris(2,4,6-tribromophenoxy)-s-triazine, represented by Formula V:

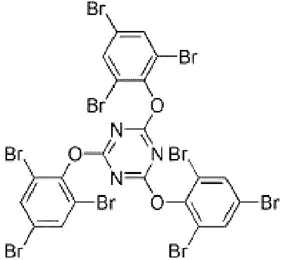

The preparation of tris(2,4,6-tribromophenoxy)-s-triazine is generally based on the reaction of cyanuric chloride with 2,4,6-tribromophenolate under various conditions well known in the art (see, for example, US 5,907,040, 5,965,731 and 6,075,142). The flame retardant is also commercially available from ICL-IP under the name FR-245. The results reported below indicate that unlike the brominated nonpolymeric compound DPDPE, which depends strongly on the presence of antimony oxide synergist, coatings which are flame retarded by FR-245/Mg(OH)₂ exhibit reduced flammability, akin to coatings which are flame retarded by FR-245/APO and FR-245/APO/Mg(OH)₂.

Accordingly, also described is a flame retardant coating formulation, comprising:
from 10 to 50 % by weight of water, e.g., 20 (or 25) to 45 %;
from 10 to 35 % by weight of binder, e.g., 15 (or 20) to 30 %;
from 5 to 25 % by weight of tris(2,4,6-tribromophenoxy)-s-triazine; e.g., 8 (or 10) to 20 %; and
from 2 to 10 % by weight of Mg(OH)₂ or Al(OH)₃ e.g., 3 to 7 %.

Also described is a suspension which comprises water, Mg (OH)₂ or Al(OH)₃, tris(2,4,6-tribromophenoxy)-s-triazine, a coalescing agent (such as propylene glycol), a dispersing agent (sometimes a single component serves a dual function of dispersant/wetting agent) and a defoamer, proportioned 100: 20-40: 90-120: 50-75: 5-10: 1-5, by weight, respectively, forms aspect of the invention.

### Brief description of the drawings

Figure 1 is a bar chart showing the performance of coating formulations in the SBI test (FIGRA results).
Figure 2 is a bar chart showing the performance of coating formulations in the SBI test (SMOGRA results).
Figure 3 is graph showing heat release rates versus time curves recorded in a cone calorimeter while testing the burning properties of pine wood samples coated with BER/Mg(OH)₂-containing acrylic coatings and comparative coatings.
Figure 4 is a graph showing heat release rates versus time curves recorded in a cone calorimeter while testing the burning properties of MDF samples coated with BER/Mg(OH)₂-containing polyurethane coatings and comparative coatings.
Figure 5 is a graph showing heat release rates versus time curves recorded in a cone calorimeter while testing the burning properties of MDF samples coated with FR 122P/Mg(OH)₂-containing polyurethane coatings and comparative coatings.

### Examples

Materials used for preparing the coating formulations are tabulated in Table 1 (FR means flame retardant):

**Table 1**

| Component | GENERAL DESCRIPTION | FUNCTION |
|---|---|---|
| TexFRon^{®} 4002 (ICL-IP) | tribromophenol end-capped brominated epoxy polymer; MW= 1500-2500; PSD: d50<5 µm; d90< 10 µm; d99< 30 µm | brominated polymeric FR |
| FR 122-P (ICL-IP) | polystyrene-block-brominated polybutadiene-block-polystyrene | brominated polymeric FR |
| FR 803P (ICL-IP) | brominated polystyrene | brominated polymeric FR |
| FR 1410 (ICL-IP) | Decabromodiphenyl Ethane | brominated FR |
| FR 245 (ICL-IP) | Tris(2,4,6-tribromophenoxy)-s-triazine | brominated FR |
| FR-20-100-S10 (ICL-IP) | Mg(OH)_{2;} PSD: 1.1µm ≤d50 ≤ 1.4 µm; 2 µm ≤ d90 ≤4 µm; BET: 8.5-11 m2/gr. PSD was determined by adding 0.15 grams of the powder in a dry 50 ml beaker, about 20 ml of isopropanol as a dispersion medium was added, the mixture was stirred using a magnetic stirrer for about 10-15 seconds and then dispersed in a 30 ultrasonic homogenizer (Elmasonic P) for 3 minutes, and the particle size distribution was measured by a laser diffraction scattering type particle size distribution measuring apparatus (Malvern Mastersizer 2000) . | FR |
| ATH (SB-432, HUBER) | Alumina trihydrate | FR |
| AC 2523 (Alberdingk Boley) | Acrylic based copolymer dispersion Solid content: 47-49%; pH: 7.5-8.5; Viscosity: 500-4000 cps (Iso 1652) | binder |
| PU 9600VP (Alberdingk Boley) | Aliphatic polyester polyurethane dispersion Solid content: 34-36%; pH: 7.5-8.5 Viscosity: 500-1500 cps (Iso 1652) | binder |
| Disperbyk^{®}-2010 (BYK-Chemie GmbH) | Aqueous emulsion of a structured acrylate copolymer with pigment-affinic groups | dispersing, wetting agent |
| LOPON^{®} 800 ICL | Polyacrylate, sodium salt | Anionic dispersant |
| Calgon^{®} N ICL | Polyphosphate, sodium salt | Anionic dispersant |
| BYK^{®} 346 (BYK-Chemie GmbH) | a solution of a polyether-modified polysiloxane | Substrate wetting agent |
| BYK^{®} 093 (BYK-Chemie GmbH) | a mixture of polysiloxanes and hydrophobic solids in polyglycol | Defoamer |
| BYK^{®} 420 (BYK-Chemie GmbH) | a solution of a modified urea | Thickening, anti-settling agent |
| PG (Gadot Chemicals) | Propylene glycol | coalescing agent |
| NYACOL^{®} A1550 Nyacol Nano Technologies | 48% by weight aqueous dispersion of nano-sized antimony pentoxide | FR synergist |
| Supragil^{®} WP (Solvay) | Sodium Isopropyl Naphthalene Sulfonate | wetting agent |

### Preparation 1 (comparative)

### Aqueous dispersion of BER

Water (1313.5 g) was added to a mixing vessel, followed by addition of propylene glycol (869.5 g) and DISPERBYK 2010 (107 g) under stirring at a rate of 500 rpm (using R 1303 dissolver stirrer IKA with EUROSTAR power control-vise motor, IKA). BYK 093 (18.5 g) was slowly added. Next, TexFRon^{®} 4002 (1369 g) was added slowly to the mixture, which was maintained under stirring to form homogeneous suspension. Lastly, BYK 420 (22.5 g) was added. Stirring was continued for an additional 30 minutes.

### Preparation 2 (of the invention)

### Aqueous dispersion of BER and Mg(OH)₂

Water (1180.3 g) was added to a mixing vessel, followed by addition of propylene glycol (777.0 g), DISPERBYK 2010 (96.2g) and BYK 093 (18.5 g) under stirring at a rate of 500 rpm (using R 1303 dissolver stirrer IKA with EUROSTAR power control-vise motor, IKA). Next, magnesium hydroxide (407.0 g of FR-20-100-S10 grade from ICL-IP) was introduced to the vessel under high shear rate at 10000 rpm. After the total amount of the magnesium hydroxide was added, the rate was increased to 20000 rpm for five minutes, to obtain a homogeneous suspension (high shear disperser was T 25 digital ULTRA-TURRAX instrument, equipped with S 25 KV - 25F dispersing tool, from IKA).

Lastly, TexFRon^{®} 4002 (1221 g) was added slowly to the suspension, which was maintained under stirring (with the dissolver stirrer at 1000 rpm for twenty minutes) to afford the final suspension.

### Example 1 (reference)

### Water-based acrylic coating formulation

Alberdingk 2523 (3116.80 g) was added to a mixing vessel, followed by the addition of DISPERBYK 2010 (32 g), BYK 346 (9.60 g) and BYK 093 (25.60) under stirring at a rate of 500 rpm (using R 1300 dissolver stirrer IKA with EUROSTAR power control-vise motor, IKA). After ten minutes, BYK 420 (16 g) was added. The mixture was maintained under stirring for 30 minutes.

### Example 2 (comparative)

### BER-containing acrylic coating formulation

Alberdingk 2523 (1644.8 g) was added to a mixing vessel, followed by the addition of DISPERBYK 2010 (32.0 g), BYK 346 (9.6 g) and BYK 093 (25.60) under stirring at a rate of 500 rpm (using R 1300 dissolver stirrer IKA with EUROSTAR power control-vise motor, IKA).

After ten minutes, the aqueous suspension of BER of Preparation 1 (1472 g) was added. The mixture was maintained under stirring to form a homogeneous formulation. Lastly, BYK 420 (16 g) was added. The mixture was maintained under stirring for 30 minutes.

### Example 3 (comparative; based on US 10,626,289)

### BER/APO-containing acrylic coating formulation

Alberdingk 2523 (1446.4 g) was added to a mixing vessel, followed by the addition of DISPERBYK 2010 (32.0 g), BYK 346 (9.6 g) andBYK 093 (25.6) under stirring at a rate of 500 rpm (using R 1300 dissolver stirrer IKA with EUROSTAR power control-vise motor, IKA).

After ten minutes, the aqueous suspension of BER of Preparation 1 (1472 g) was added. The mixture was maintained under stirring to form a homogeneous formulation. Next, a water-based dispersion of antimony pentoxide (APO; 198.4 g of 48 % by weight aqueous dispersion of nano-sized Sb₂O₅; NYACOL A1550) was introduced to the vessel and stirred for five minutes. Lastly, BYK 420 (16 g) was added. The mixture was stirred for an additional 30 minutes.

### Example 4 (comparative)

### BER/APO/Mg(OH)₂-containing acrylic coating formulation

Alberdingk 2523 (1280.0 g) was added to a mixing vessel, followed by the addition of DISPERBYK 2010 (32.0 g), BYK 346 (9.6 g) and BYK 093 (25.60) under stirring at a rate of 500 rpm (using R 1300 dissolver stirrer IKA with EUROSTAR power control-vise motor, IKA).

After ten minutes, the aqueous suspension of BER/Mg(OH)₂ of Preparation 2 (1638 g) was added. The mixture was maintained under stirring (starting at 1300 rpm, later switching to 700 rpm) to form a homogeneous formulation. Next, a water-based dispersion of antimony pentoxide (APO; 198.4 g of 48 % by weight aqueous dispersion of nano-sized Sb₂O₅; NYACOL A1550) was introduced to the vessel and stirred for five minutes. Lastly, BYK 420 (16 g) was added. The mixture was maintained under stirring for 30 minutes.

### Example 5 (of the invention)

### BER/ Mg(OH)₂-containing acrylic coating formulation

Alberdingk 2523 (1468.8 g) was added to a mixing vessel, followed by the addition of DISPERBYK 2010 (32.0 g), BYK 346 (9.6 g), BYK 093 (25.60) and Lopon 800 (16 g) under stirring at a rate of 500 rpm (using R 1300 dissolver stirrer IKA with EUROSTAR power control-vise motor, IKA). After ten minutes, the aqueous suspension of BER/Mg(OH)₂ of Preparation 2 (1638.4 g) was added. The mixture was maintained under stirring to form a homogeneous formulation. Lastly, BYK 420 (16 g) was added. The mixture was maintained under stirring for 30 min.

### Example 6

### Flammability test of coated flame retarded MDF samples (SBI test to evaluate BER/Mg(OH)₂-containing acrylic coatings)

The coating formulations of Examples 1 to 5 were evaluated according to the EN 13823 Single Burning Item (SBI) Test.

### Preparation of the test specimen

A coating formulation was applied to an assembly consisting of two vertically positioned rectangular fire-retarded MDF plates (1500 mm × 1000 mm × 18 mm, and 1500 mm × 500 mm × 18 mm, produced by QINGDAO EONCRED WOOD CO., LTD), joined along their equal side to create a 90° corner. The coating was applied by a brush. Three coats were formed; each coat was dried at room temperature for at least four hours before the application of the next coat. Then the wood assembly was dried for sixteen hours prior to testing.

### Test procedure

Details of the SBI test can be found, for example, in http://virtual.vtt.fi/virtual/innofirewood/stateoftheart/database/euroclass/euro class.html. Briefly, the test was carried out in a small room (l=3m × w=3m × h=2.4m), in which two vertical non-combustible boards served to hold the test specimen (the specimen holder consists of wings of sizes 1.0 m × 1.5 m and 0.5 m × 1.5 m positioned in a right-angled corner configuration, i.e., corresponding in shape and size to the test specimen). A propane gas burner was placed at the bottom of the 90°C corner of the test specimen to produce heat output of 30 kW. Combustion gases generated during a test were collected by a hood and drawn to an exhaust duct equipped with sensors to measure the temperature, light attenuation, O₂ and CO₂ mole fractions and flow-induced pressure difference in the duct. The performance of the specimen was evaluated for an exposure period of 20 minutes. During the test, the heat release rate was measured by using oxygen consumption calorimetry. The smoke production rate was measured in the exhaust duct based on the attenuation of light. Falling of flaming droplets or particles was visually observed during the first 600 seconds of the heat exposure on the specimen.

### Results

The compositions of the five coating formulations that were tested are tabulated in Table 2 below, together with the results of the SBI test:

**Table 2**

| | Ex 1 (reference) | Ex 2 (comparative) | Ex 3 (comparative) | Ex 4 (comparative) | Ex 5 (of the invention) |
|---|---|---|---|---|---|
| **Composition (% by weight)** | | | | | |
| Water-based acrylic resin (Alberdingk 2523 AC; ~ 47-49 % solids) | 97.4 | 51.4 | 45.2 | 40.0 | 45.90 |
| Aqueous suspension of BER (Preparation 1: 37% BER) | - | 46.0 (17% BER) | 46.0 (17% BER) | - | - |
| Aqueous suspension of BER/MgOH₂ (Preparation 2: 33.0 % BER, 11% Mg(OH)₂) | - | - | - | 51.2 (17% BER + 5.6% Mg(OH)₂) | 51.2 (17% BER + 5.6% Mg(OH)₂) |
| Water-based Sb2O5 dispersion (NYACOL A1550; 48.0 % APO) | - | - | 6.2 (3% APO) | 6.2 (3% APO) | - |
| Dispersing and wetting agent (DISPERBYK 2010) | 1.0 | 1.0 | 1.0 | 1.0 | 1.0 |
| Substrate wetting agent (BYK 346) | 0.3 | 0.3 | 0.3 | 0.3 | 0.3 |
| Defoamer (BYK 093) | 0.8 | 0.8 | 0.8 | 0.8 | 0.8 |
| Rheology additive (BYK 420) | 0.5 | 0.5 | 0.5 | 0.5 | 0.3 |
| Dispersing agent (Lopon 800) | | | | | 0.5 |

| **SBI test** | | | | | |
|---|---|---|---|---|---|
| Fire growth rate index 0.2MJ (FIGRA), [W/s] 0.4MJ | 370.74 | 377.71 | 254.67 | 229.7 | 189.53 |
| | 370.74 | 377.71 | 254.67 | 229.7 | 189.53 |
| Total heat release (THR₆₀₀ₛ), [MJ] | 12.65 | 15.31 | 9.75 | 10.54 | 8.84 |
| Smoke growth rate index (SMOGRA), [m2/s2] | 13.1 | 26.71 | 47.40 | 28.17 | 21.58 |
| Total smoke production (TSP₆₀₀ₛ) [m2] | 61.77 | 71.87 | 109.31 | 85.42 | 78.83 |

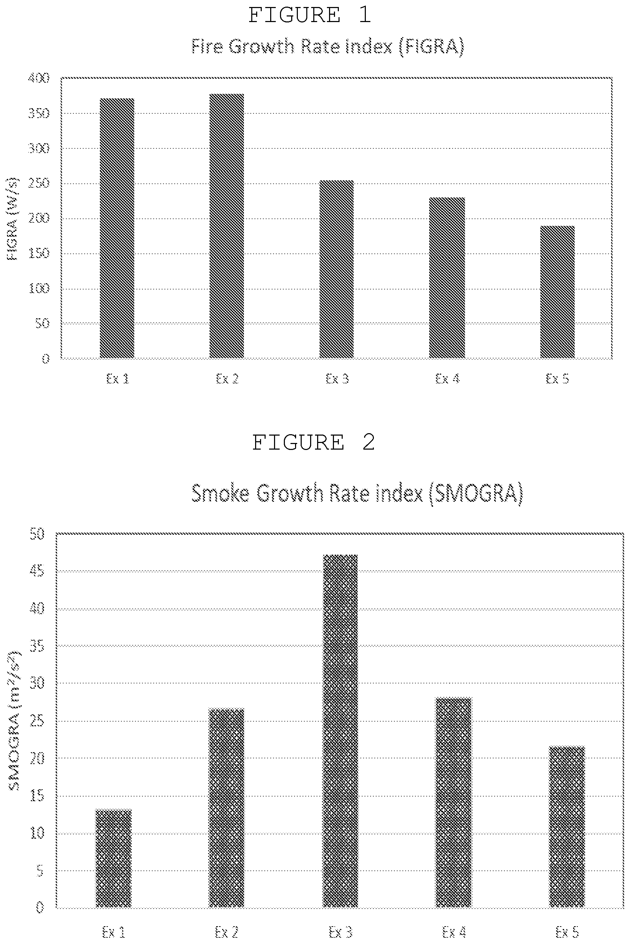

To better illustrate trends observed in the study, the results of two test variables (Fire Growth Rate Index, FIGRA; and Smoke Growth Rate Index; SMOGRA) are presented graphically in the form of bar diagrams in Figures 1 and 2, respectively. In both Figures 1 and 2, the bars, from left to right, correspond to Examples 1 to 5, respectively (FR-free coating, BER-added coating, BER/APO-added coating, BER/APO/Mg(OH)₂ added-coating and antimony free, BER/Mg(OH)₂-added coating, respectively; all are comparative with the exception of Example 5).

In Figure 1 is seen that the FIGRA measured for the reference formulation (Example 1) and the BER-added formulation (Example 2) were comparable. As expected, addition of an antimony oxide synergist led to improvement (Example 3), confirming the conventional wisdom that the action of brominated flame retardants leans heavily on the presence of antimony oxide synergist. Addition of another type of flame retardant to the coating - magnesium hydroxide - resulted in a further decrease of FIGRA (Example 4). However, the antimony oxide-free coating of Example 5 - keeping the same levels of BER and magnesium hydroxide as in Example 4 - achieved the best result, i.e., lower FIGRA compared to the BER/APO/Mg(OH)₂ - added coating. It is of note that both BER/APO/Mg(OH)₂ - added coating and BER/Mg(OH)₂-added coating met the requirements of the C classification of the EN 13823 SBI test (FIGRA_{0.4MJ} ≤ 250 W/s), but the formulation of the invention demonstrated better performance.

In Figure 2 it is seen that addition of flame retardants to a coating/paint applied to a wood, increases the production of smoke during fire. However, lower levels of smoke production were measured for the coating formulation of the invention (Example 5), compared to other flame-retardant coating formulations that were tested.

### Example 7

### Coating evaluation: optical properties of BER/Mg(OH)₂ - containing acrylic coatings

To investigate the effect of magnesium hydroxide on the optical properties of the coatings, the formulations of Example 1 (reference; FR- free formulation), Example 2 (comparative; BER-added formulation), and Example 5 (of the invention; BER/Mg(OH)₂-added formulation) were applied on a glass surface using an applicator (byko-drive - BYK Gardner GmbH). The tested coating formulation was poured into a rectangular shallow receptable (Film Applicator with 4 Gaps, frame-style by BYK), which moved along the surface; the bottom and top bases of the receptable were open, such that the formulation was spread on the surface when the receptable moved, creating a wet film). After 24 h the dry film was removed from the glass. Haze and transparency were determined using DATACOLOR 650. Results are tabulated below.

**Table 3**

| | Ex 1 Reference | Ex 2 BER (comparative) | Ex 5 BER + MDH (of the invention) |
|---|---|---|---|
| **Composition (% by weight)** | | | |
| Water-based acrylic resin (Alberdingk 2523 AC; ~ 47-49 % solids) | 97.4 | 51.4 | 45.90 |
| Aqueous suspension of BER (Preparation 1: 37% BER) | - | 46.0 (17% BER) | - |
| Aqueous suspension of BER/MgOH₂ (Preparation 2: 33.0 % BER, 11% Mg(OH)₂) | - | - | 51.2 (17% BER + 5.6% Mg(OH)₂)) |
| Dispersing and wetting agent (DISPERBYK 2010) | 1.0 | 1.0 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.5 | 0.3 |
| Dispersing agent (Lopon 800) | | | 0.5 |

| **Optical properties** | | | |
|---|---|---|---|
| Transparency [%] | 92.17 | 76.54 | 76.34 |
| Haze [%] | 3.3 | 80.0 | 78.4 |
| Thickness [micron] | 43-45 | 36-42 | 42-48 |

It is seen that addition of magnesium hydroxide (MDH) to the coating, to aid the brominated flame retardant, does not impair the optical properties of the coating.

### Example 8

### Cone calorimeter test to evaluate BER/Mg(OH)₂ - containing acrylic coatings on pine wood samples

The coating formulations of Examples 2, 4 and 5 were applied on pine wood samples and evaluated in a cone calorimeter.

### Preparation of the test specimen

10 mm thick, square shaped pine wood samples (100 mm × 100 mm) were coated by the formulations of Examples 2, 4 and 5. The coatings were applied by a brush - three coats (of the same formulation) were formed; each coat was dried at room temperature for at least four hours before the application of the next coat. Then the samples were dried for at least a week prior to testing.

### Test procedure

Data was collected by a cone calorimeter [FTT iCone Classic Calorimeter manufactured by Fire Testing Technology, West Sussex, UK] under a heat flux of 50 kW/m² over 240 seconds. The specimens were tested without an edged frame sample holder exposing a surface area of 100 cm². The FR treated samples were tested in the horizontal orientation 25 mm from the heat source. The samples were wrapped in aluminum foil to prevent edge burning effects.

### Results

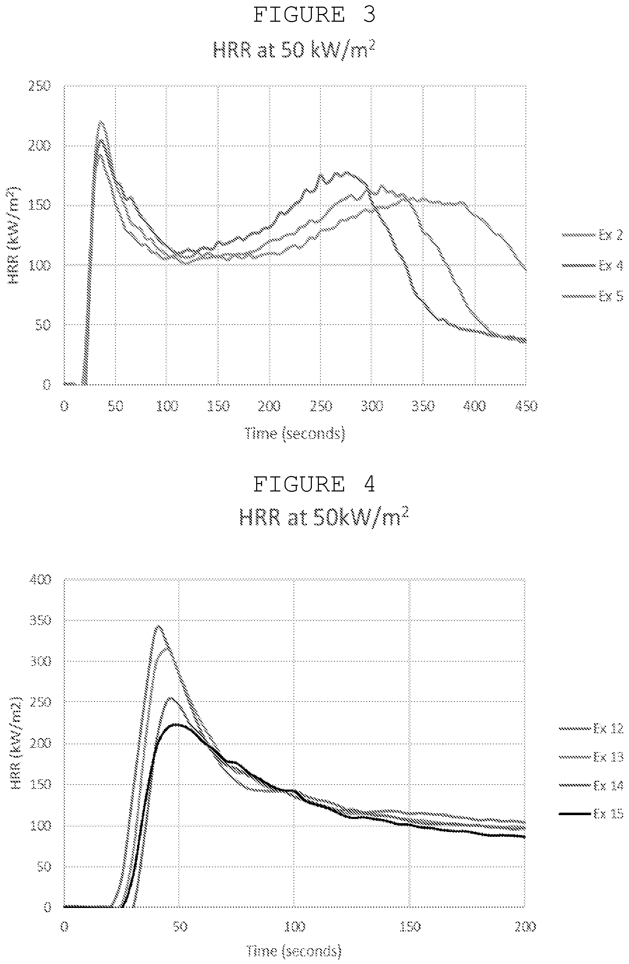

The compositions of the coating formulations that were tested are tabulated in Table 4 below, together with the results of the cone calorimeter test. Parameters related to the heat release rate (HRR) were given the main consideration. An effective flame-retardant system should show low values of peak and average HRR and a low MARHE (Maximum Average Rate of Heat Emission). HRR curves versus time are shown in Figure 3.

**Table 4**

| | Ex 2 BER (comparative) | Ex 4 BER + APO + MDH (comparative) | Ex 5 BER + MDH (of the invention) |
|---|---|---|---|
| Composition (% by weight) | | | |
| Water-based acrylic resin (Alberdingk 2523 AC; ~ 47-49 % solids) | 51.4 | 40.0 | 45.90 |
| Aqueous suspension of BER (Preparation 1: 37% BER) | 46.0 (17% BER) | - | - |
| Aqueous suspension of BER/MgOH₂ (Preparation 2: 33.0 % BER, 11% Mg(OH)₂) | - | 51.2 (17% BER + 5.6% Mg(OH)₂) | 51.2 (17% BER + 5.6% Mg(OH)₂) |
| Water-based Sb2O5 dispersion (NYACOL A1550; 48.0 % APO) | - | 6.2 (3% APO) | - |
| Dispersing and wetting agent (DISPERBYK 2010) | 1.0 | 1.0 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.5 | 0.3 |
| Dispersing agent (Lopon 800) | | | 0.5 |

| **Cone calorimeter test** | | | |
|---|---|---|---|
| Peak heat release rate (kW/m²) | 219.2 | 204.3 | 192.3 |
| Average heat release rate (kW/m²) | 118.2 | 115.6 | 107.2 |
| Maximum average heat release rate (kw/m²) | 126.0 | 133.3 | 123.7 |

The results obtained for coated pine wood samples by the cone calorimeter test confirm the trend observed in the SBI test for MDF samples (reported in Example 6). That is, the antimony oxide-free coating of Example 5, based on BER/Mg(OH)₂, showed the best performance, i.e., better than the coating which was flame retarded by the ternary, antimony oxide containing combination BER/APO/Mg(OH)₂.

### Example 9

### Effect of dispersants on long-term storage stability

The goal of the study was to evaluate the efficiency of different dispersing agents in maintaining the stability of the coating formulations at accelerated storage conditions. Three formulations were made by adding an aqueous suspension consisting of: 31.9 % water; 21 % propylene glycol; 2.6 % BYK 2010; 0.5 % BYK 093; 33 % TexFRon^{®} 4002 and 11 % Mg(OH)₂ (prepared by the Procedure of Preparation 2), to the acrylic resin in the manner described in Example 5, using the same formulation aids, but testing three types of dispersing agents:
Example 9A: nonionic dispersing agent (extra 0.5 % by weight of DISPERBYK 2010, an acrylate copolymer);
Example 9B: anionic dispersing agent; (0.5 % by weight of Calgon N, a sodium polyphosphate salt of medium chain length);
   and
Example 9C: anionic dispersing agent (0.5 % by weight of LOPON 800, a sodium polyacrylate salt).

**Table 5**

| | Ex 9A | Ex 9B | Ex 9C |
|---|---|---|---|
| **Composition (% by weight)** | | | |
| Water-based acrylic resin (Alberdingk 2523 AC; ~ 47-49 % solids) | 45.9 | 45.9 | 45.9 |
| Aqueous suspension of BER/MgOH₂ (33 % BER, 11% Mg(OH)₂) | 51.2 | 51.2 | 51.2 |
| Dispersing/wetting agent (DISPERBYK 2010) | 1.5 | 1.0 | 1.0 |
| Substrate wetting agent BYK 346 | 0.3 | 0.3 | 0.3 |
| Defoamer (BYK 093) | 0.8 | 0.8 | 0.8 |
| Rheology additive (BYK 420) | 0.3 | 0.3 | 0.3 |
| Dispersing agent (Calgon N) | | 0.5 | |
| Dispersing agent (Lopon 800) | | | 0.5 |

| **Properties** | | | |
|---|---|---|---|
| Appearance after storage at 40°C over 4 weeks | Non-fluid mass was formed | Little separation on surface; after shaking, easily flowable | Little separatior on surface; after shaking, easily flowable |
| Appearance after storage at 40°C over 8 weeks | | Non-fluid mass was formed | Little separation on surface; after shaking, easily flowable |

Usually accelerated testing of paints/coating formulations is carried out at elevated temperature for a period of a few weeks and then the formulation is visually examined. The results tabulated in Table 5 indicate that long-term storage stability of the brominated flame retardant/Mg(OH)₂ formulation was achieved owing to a combination of a nonionic dispersing agent and an anionic dispersing agent, e.g., one that is based on polyphosphate or polyacrylate, in the form of their sodium salts. In the absence of the anionic surfactant, the formulation transformed into a non-fluid mass (gel or solid). In the presence of an anionic surfactant, little separation was observed at the end of the test (the four and eight weeks of test periods correspond to one and two years of storage under normal conditions, respectively), but the formulation was re-dispersed easily to restore its flowability and functionality.

As seen in Table 5, a suspension exhibiting especially prolonged stability is achieved with the aid of anionic dispersant based on polyacrylate. This has been further confirmed by ~ one-year test under normal (room temperature) conditions.

### Preparation 3 (of the invention)

### Aqueous dispersion of BER and Al(OH)₃

An illustrative procedure for preparing 100 g of the BER/Al(OH)₃ aqueous dispersion is as follows.

Water (31.3 g) was added to a mixing vessel, followed by addition of propylene glycol (21.0 g), DISPERBYK 2010 (2.6 g) and BYK 093 (0.5 g) under stirring at a rate of 500 rpm (using R 1303 dissolver stirrer IKA with EUROSTAR power control-vise motor, IKA). Next, alumina trihydrate (11 g of SB-432 from HUBER) was introduced to the vessel under high shear rate at 14000 rpm. After the total amount of the alumina trihydrate was added, TexFRon^{®} 4002 (33 g) was added slowly to the suspension, which was maintained under stirring with the dissolver stirrer until homogeneous suspension was formed. Stirring continued for an additional 30 minutes to afford the final suspension.

### Example 10 (of the invention)

### BER/ Al(OH)₃-containing acrylic coating formulation

An illustrative procedure for preparing 250 g of the BER/Al(OH)₃ -containing acrylic coating formulation is as follows.

Alberdingk 2523 (114.75 g) was added to a 5L plastic jar, followed by the addition of DISPERBYK 2010 (2.5 g), BYK 346 (0.75 g), BYK 093 (2 g) and Lopon 800 (1.25 g) under stirring at a rate of 500 rpm (using R 1303 dissolver stirrer IKA with EUROSTAR power control-vise motor, IKA). After ten minutes, the aqueous suspension of BER/A1(OH)₃ of Preparation 3 (128 g) was added. The mixture was maintained under stirring to form a homogeneous formulation. Lastly, BYK 420 (0.75 g) was added. The mixture was maintained under stirring at 500 rpm for 30 min.

### Example 11

### Cone calorimeter test to evaluate BER/Al(OH)₃-containing acrylic coatings on flame retarded MDF samples

The coating formulations of Examples 1, 5 and 10 were applied on MDF samples and evaluated in a cone calorimeter.

### Preparation of the test specimen

18 mm thick, square shaped MDF samples (100 mm × 100 mm) were coated by the formulation of Examples 1, 5 and 10. The coatings were applied by a brush - three coats were formed; each coat was dried at room temperature for at least four hours before the application of the next coat. Then the samples were dried for at least a week prior to testing.

### Test procedure

Data was collected by a cone calorimeter [FTT iCone Classic Calorimeter manufactured by Fire Testing Technology, West Sussex, UK] under a heat flux of 50 kW/m² over 240 seconds. The specimens were tested without an edged frame sample holder exposing a surface area of 100 cm². The FR treated samples were tested in the horizontal orientation 25 mm from the heat source. The samples were wrapped in aluminum foil to prevent edge burning effects.

### Results

The compositions of the coating formulations that were tested are tabulated in Table 6 below, together with the results of the cone calorimeter test.

**Table 6**

| | Ex 1 (Reference) | Ex 5 BER + MDH (of the invention) | Ex 10 BER + ATH (of the invention) |
|---|---|---|---|
| **Composition (% by weight)** | | | |
| Water-based acrylic resin (Alberdingk 2523 AC; ~ 47-49 % solids) | 97.4 | 45.9 | 45.9 |
| Aqueous suspension of BER/Mg(OH)₂ (Preparation 2: 33.0% BER + 11% Mg(OH)₂) | - | 51.2 (17% BER + 5.6% Mg(OH)₂) | - |
| Aqueous suspension of BER/Al(OH)₂ (Preparation 3: 33.0% BER + 11% Al(OH)₃) | - | - | 51.2 (17% BER + 5.6% Al (OH)₃) |
| Dispersing, wetting agent (DISPERBYK 2010) | 1.0 | 1.0 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.5 | 0.3 |
| Dispersing agent (Lopon 800) | | 0.5 | 0.5 |

| **Cone calorimeter test** | | | |
|---|---|---|---|
| Peak heat release rate (kW/m²) | 308.5 | 247.3 | 280.6 |
| Average heat release rate (kW/m²) | 118.3 | 110 | 113.1 |
| Maximum average rate of heat emission (kw/m²) | 135.3 | 120.3 | 124.9 |

The results show that coatings based on BER/MDH and BER/ATH show nearly comparable average HRR and MARHE, with an advantage of the former type of coating in relation to the peak HRR.

### Example 12 (reference)

### Water-based polyurethane coating formulation

For 200 g formulation: Alberdingk PU 9600VP (194.8 g) was added to a mixing vessel, followed by the addition of DISPERBYK 2010 (2 g), BYK 346 (0.6 g) and BYK 093 (1.6 g) under stirring at a rate of 500 rpm (using R 1303 dissolver stirrer IKA with EUROSTAR power control-vise motor, IKA). After ten minutes, BYK 420 (1 g) was added. The mixture was maintained under stirring for 30 minutes.

### Example 13 (comparative)

### BER-containing polyurethane coating formulation

For 200 g formulation: Alberdingk PU 9600VP (102.8 g) was added to a mixing vessel, followed by the addition of DISPERBYK 2010 (2 g), BYK 346 (0.6 g) and BYK 093 (1.6) under stirring at a rate of 500 rpm (using R 1303 dissolver stirrer IKA with EUROSTAR power control-vise motor, IKA).

After ten minutes, the aqueous suspension of BER of Preparation 1 (92 g) was added. The mixture was maintained under stirring to form a homogeneous formulation. Lastly, BYK 420 (1 g) was added. The mixture was maintained under stirring for 30 minutes.

### Example 14 (comparative)

### BER/APO-containing polyurethane coating formulation

For 200 g formulation: Alberdingk PU 9600VP (90.4 g) was added to a mixing vessel, followed by the addition of DISPERBYK 2010 (2 g), BYK 346 (0.6 g) and BYK 093 (1.6 g) under stirring at a rate of 500 rpm (using R 1303 dissolver stirrer IKA with EUROSTAR power control-vise motor, IKA).

After ten minutes, the aqueous suspension of BER of Preparation 1 (92 g) was added. The mixture was maintained under stirring to form a homogeneous formulation. Next, a water-based dispersion of antimony pentoxide (APO; 12.4 g of 48 % by weight aqueous dispersion of nano-sized Sb₂O₅; NYACOL A1550) was introduced to the vessel and stirred for five minutes. Lastly, BYK 420 (1 g) was added. The mixture was stirred for an additional 30 minutes.

### Example 15 (of the invention)

### BER/ Mg (OH)₂-containing polyurethane coating formulation

For 200 g formulation: Alberdingk PU 9600VP (91.8 g) was added to a mixing vessel, followed by the addition of DISPERBYK 2010 (2 g), BYK 346 (0.6 g), BYK 093 (1.6 g) and Lopon 800 (1 g) under stirring at a rate of 500 rpm (using R 1303 dissolver stirrer IKA with EUROSTAR power control-vise motor, IKA). After ten minutes, the aqueous suspension of BER/Mg(OH)₂ of Preparation 2 (102.4 g) was added. The mixture was maintained under stirring to form a homogeneous formulation. Lastly, BYK 420 (0.6 g) was added. The mixture was maintained under stirring for 30 min.

### Example 16

### Cone calorimeter test to evaluate BER/Mg(OH)₂-containing polyurethane coatings on flame retarded MDF samples

The coating formulations of Examples 12, 13, 14 and 15 were applied on MDF samples and evaluated in a cone calorimeter.

### Preparation of the test specimen

18 mm thick, square shaped MDF samples (100 mm × 100 mm) were coated by the formulation of Examples 12, 13, 14 and 15. The coatings were applied by a brush - three coats (of the same formulation) were formed; each coat was dried at room temperature for at least four hours before the application of the next coat. Then the samples were dried for at least a week prior to testing.

### Test procedure

Data was collected by a cone calorimeter [FTT iCone Classic Calorimeter manufactured by Fire Testing Technology, West Sussex, UK] under a heat flux of 50 kW/m² over 240 seconds. The specimens were tested without an edged frame sample holder exposing a surface area of 100 cm². The FR treated samples were tested in the horizontal orientation 25 mm from the heat source. The samples were wrapped in aluminum foil to prevent edge burning effects.

### Results

The compositions of the coating formulations that were tested are tabulated in Table 7 below, together with the results of the cone calorimeter test. HRR curves versus time are shown in Figure 4.

**Table 7**

| | Ex 12 (Reference) | Ex 13 BER (comparative) | Ex 14 BER + APO (comparative) | Ex 15 BER + MDH (of the invention) |
|---|---|---|---|---|
| **Composition (% by weight)** | | | | |
| Water-based polyurethane resin (Alberdingk PU 9600VP; ~ 34-36 % solids) | 97.4 | 51.4 | 45.2 | 45.90 |
| Aqueous suspension of BER (Preparation 1: 37% BER) | | 46.0 (17% BER) | 46.0 (17% BER) | - |
| Aqueous suspension of BER/MgOH₂ (Preparation 2: 33.0 % BER, 11% Mg(OH)₂) | - | - | - | 51.2 (17% BER + 5.6% Mg(OH)₂) |
| Water-based Sb2O5 dispersion (NYACOL A1550; 48.0 % APO) | - | - | 6.2 (3% APO) | - |
| Dispersing and wetting agent (DISPERBYK 2010) | 1.0 | 1.0 | 1.0 | 1.0 |
| Substrate wetting agent (BYK 346) | 0.3 | 0.3 | 0.3 | 0.3 |
| Defoamer (BYK 093) | 0.8 | 0.8 | 0.8 | 0.8 |
| Rheology additive (BYK 420) | 0.5 | 0.5 | 0.5 | 0.3 |
| Dispersing agent (Lopon 800) | | | | 0.5 |

| **Cone calorimeter test** | | | | |
|---|---|---|---|---|
| Peak heat release rate (kW/m²) | 339 | 315 | 252 | 221 |
| Average heat release rate (kW/m²) | 143 | 138 | 130.8 | 122.6 |
| Maximum average heat release rate (kw/m²) | 150 | 141.7 | 125.3 | 123.7 |

The results indicate that polyurethane coatings could benefit from the combination of the invention, BER/Mg(OH)₂, which performed very well in retarding the flammability of coated MDF samples, exhibiting lower HRR parameters compared to the conventional BER/antimony oxide combination.

### Preparation 4 (comparative)

### Aqueous dispersion of brominated poly[styrene-co-butadiene]

An illustrative procedure for preparing 400 g of the FR-122P aqueous dispersion is as follows.

Water (168.9 g) was added to a mixing vessel, followed by addition of propylene glycol (111.8 g), DISPERBYK 2010 (8.4 g), BYK 093 (1.6 g) and Supragil WP (2 g) under stirring at a rate of 400-900 rpm (using R 1303 dissolver stirrer IKA with EUROSTAR power control-vise motor, IKA). Next, FR-122P (106.2 g) was added slowly to the mixture, which was maintained under stirring to form homogeneous suspension. Lastly, BYK 420 (1.2 g) was added slowly. Stirring was continued for additional 30 minutes at 500 ppm.

### Preparation 5 (of the invention)

### Aqueous dispersion of brominated poly[styrene-co-butadiene] and Mg(OH)₂

An illustrative procedure for preparing 400 g of the FR-122P/Mg(OH)2 aqueous dispersion is as follows.

Water (153.5 g) was added to a mixing vessel, followed by addition of propylene glycol (101.2 g), DISPERBYK 2010 (10.8g) and BYK 093 (1.6 g) and Supragil WP (2.0 g) under stirring at a rate of 400-900 rpm (using R 1303 dissolver stirrer IKA with EUROSTAR power control-vise motor, IKA). Next, magnesium hydroxide (44 g of FR-20-100-S10 grade from ICL-IP) was introduced to the vessel under high shear rate at 14000 rpm (high shear disperser was T 25 digital ULTRA-TURRAX instrument, equipped with S 25 KV - 25F dispersing tool, from IKA).

Lastly, FR-122P (86.9 g) was added slowly to the suspension, which was maintained under stirring (with the dissolver stirrer at 500 rpm) until homogeneous suspension was formed. Stirring continued for additional thirty minutes.

### Example 17 (comparative)

### Brominated poly[styrene-co-butadiene]-containing acrylic coating formulation

An illustrative procedure for preparing 200 g of the FR-122P- containing acrylic coating formulation is as follows.

Alberdingk 2523 (111.1 g) was added to a mixing vessel, followed by the addition of BYK 093 (1.6 g), BYK 346 (0.6 g) and DISPERBYK 2010 (1.4 g), under stirring at a rate of 400 rpm (using R 1303 dissolver stirrer IKA with EUROSTAR power control-vise motor, IKA).

The rotational speed was increased to 600 rpm and the aqueous suspension of FR-122P of Preparation 4 (84.4 g) was added. The mixture was maintained under stirring to form a homogeneous formulation. Lastly, BYK 420 (1.0 g) was added. The mixture was maintained under stirring for 30 minutes at 500 rpm.

### Example 18 (comparative)

### Brominated poly[styrene-co-butadiene]/APO-containing acrylic coating formulation

An illustrative procedure for preparing 200 g of the FR-122P/APO-containing acrylic coating formulation is as follows.

Alberdingk 2523 (98.7 g) was added to a mixing vessel, followed by the addition of BYK 093 (1.6 g), BYK 346 (0.6 g) and DISPERBYK 2010 (1.4 g) under stirring at a rate of 400 rpm (using R 1303 dissolver stirrer IKA with EUROSTAR power control-vise motor, IKA).

The rotational speed was increased to 600 rpm and the aqueous suspension of FR-122P of Preparation 4 (84.4 g) was added. The mixture was maintained under stirring to form a homogeneous formulation. Next, a water-based dispersion of antimony pentoxide (APO; 12.4 g of 48 % by weight aqueous dispersion of nano-sized Sb₂O₅; NYACOL A1550) was introduced to the vessel under stirring. Lastly, BYK 420 (1.0 g) was added. The mixture was stirred for additional 30 minutes at 500 rpm.

### Example 19 (of the invention)

### Brominated poly[styrene-co-butadiene]/Mg(OH)₂-containing acrylic coating formulation

An illustrative procedure for preparing 200 g of the FR-122P/Mg(OH)₂ containing acrylic coating formulation is as follows.

Alberdingk 2523 (98.2 g) was added to a mixing vessel, followed by the addition of BYK 093 (1.6 g), BYK 346 (0.6 g), DISPERBYK 2010 (2.0 g) and Lopon 800 (1.0 g) under stirring at a rate of 400 rpm (using R 1303 dissolver stirrer IKA with EUROSTAR power control-vise motor, IKA).

The rotational speed was increased to 600 rpm and the aqueous suspension of FR-122P/Mg(OH)₂ of Preparation 5 (96 g) was added. The mixture was maintained under stirring to form a homogeneous formulation. Lastly, BYK 420 (0.6 g) was added. The mixture was stirred for additional 30 minutes at 500 rpm.

### Example 20

### Cone calorimeter test to evaluate brominated poly[styrene-co-butadiene]/Mg(OH)₂-containing acrylic coatings on MDF samples

The coating formulations of Examples 17, 18 and 19 were applied on MDF samples and evaluated in a cone calorimeter.

### Preparation of the test specimen

18 mm thick, square shaped MDF samples (100 mm × 100 mm) were coated by the formulation of Examples 17, 18 and 19. The coatings were applied by a brush - three coats (of the same formulation) were formed; each coat was dried at room temperature for at least four hours before the application of the next coat. Then the samples were dried for at least a week prior to testing.

### Test procedure

Data was collected by a cone calorimeter [FTT iCone Classic Calorimeter manufactured by Fire Testing Technology, West Sussex, UK] under a heat flux of 50 kW/m² over 240 seconds. The specimens were tested without an edged frame sample holder exposing a surface area of 100 cm². The FR treated plaques were tested in the horizontal orientation 25 mm from the heat source. The samples were wrapped in aluminum foil to prevent edge burning effects.

### Results

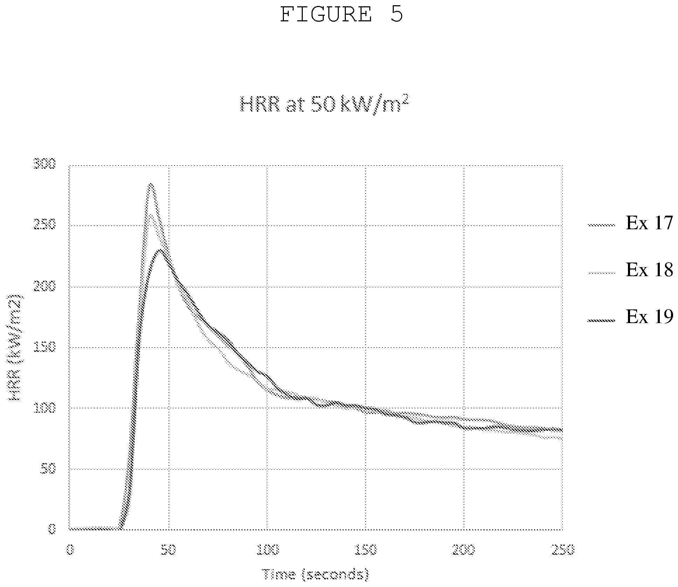

The compositions of the coating formulations that were tested are tabulated in Table 8 below, together with the results of the cone calorimeter test. HRR curves versus time are shown in Figure 5.

**Table 8**

| | Ex 17 FR-122P (comparative) | Ex 18 FR-122P + APO (comparative) | Ex 19 FR122P + MDH (of the invention) |
|---|---|---|---|
| **Composition (% by weight)** | | | |
| Water-based acrylic resin (Alberdingk 2523 AC; ~ 47-49 % solids) | 55.5 | 49.3 | 49.1 |
| Aqueous suspension of FR-122P (Preparation 4: 26.6 % FR-122P) | 42.2 (11.2% FR-122P) | 42.2 (11.2% FR-122P) | - |
| Aqueous suspension of FR-122P/Mg(OH)₂ (Preparation 5: 21.7% FR-122P + 11% Mg(OH)₂) | - | - | 48 (10.4% FR-122P +5.3 % Mg(OH)2) |
| Water-based Sb2O5 dispersion (NYACOL A1550; 48.0 % APO) | | 6.2 (3% APO) | |
| Dispersing and wetting agent (DISPERBYK 2010) | 0.7 | 0.7 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.5 | 0.3 |
| Dispersing agent (Lopon 800) | | | 0.5 |

| **Cone calorimeter test** | | | |
|---|---|---|---|
| Peak heat release rate (kW/m²) | 281.1 | 256.6 | 230.3 |
| Average heat release rate (kW/m²) | 114.6 | 109.3 | 112.4 |
| Maximum average rate of heat emission (kw/m²) | 127.0 | 174.7 | 121.0 |

The results indicate that in coatings which are flame retarded by brominated poly[styrene-co-butadiene], Mg(OH)₂ could serve as a replacement for antimony oxide, generating antimony oxide-free coatings which show acceptable burning properties.

### Preparation 6 (comparative)

### Aqueous dispersion of brominated polystyrene

Water (126.7 g) was added to a mixing vessel, followed by addition of propylene glycol (83.8 g), DISPERBYK 2010 (6.3 g), BYK 093 (1.2 g) and Supragil WP (1.5 g) under stirring at a rate of 500 rpm (using R 1303 dissolver stirrer IKA with EUROSTAR power control-vise motor, IKA). Next, FR-803P (79.7 g) was added slowly to the mixture, which was maintained under stirring to form homogeneous suspension. Lastly, BYK 420 (0.9 g) was added slowly. Stirring was continued for additional 30 minutes at 500 ppm, to give 300 g of an aqueous dispersion of brominated polystyrene.

### Preparation 7 (comparative)

### Aqueous dispersion of brominated polystyrene and Mg(OH)₂

Water (114.5 g) was added to a mixing vessel, followed by addition of propylene glycol (75.9 g), DISPERBYK 2010 (8.1 g) and BYK 093 (1.2 g) and Supragil WP (1.5 g) under stirring at a rate of 500 rpm (using R 1303 dissolver stirrer IKA with EUROSTAR power control-vise motor, IKA). Next, magnesium hydroxide (33 g of FR-20-100-S10 grade from ICL-IP) was introduced to the vessel under high shear rate at 14000 rpm (high shear disperser was T 25 digital ULTRA-TURRAX instrument, equipped with S 25 KV - 25F dispersing tool, from IKA).

FR-803P (65.2 g) was added slowly to the suspension, which was maintained under stirring (with the dissolver stirrer at 500 rpm) until homogeneous suspension was formed. Lastly, BYK 420 (0.6 g) was added. Stirring continued for additional thirty minutes, to give 300 g of the formulation.

### Example 21 (comparative)

### Brominated polystyrene-containing acrylic coating formulation

An illustrative procedure for preparing 200 g of the FR-803P containing acrylic coating formulation is as follows.

Alberdingk 2523 (111.1 g) was added to a mixing vessel, followed by the addition of BYK 093 (1.6 g), BYK 346 (0.6 g) and DISPERBYK 2010 (1.4 g) under stirring at a rate of 500 rpm (using R 1303 dissolver stirrer IKA with EUROSTAR power control-vise motor, IKA).

The rotational speed was increased to 600 rpm and the aqueous suspension of FR-803P of Preparation 6 (84.4 g) was added. The mixture was maintained under stirring to form a homogeneous formulation. Then BYK 420 (1 g) was added. The mixture was maintained under stirring for 30 minutes at 500 rpm.

### Example 22 (comparative)

### Brominated polystyrene/APO/Mg(OH)₂-containing acrylic coating formulation

An illustrative procedure for preparing 200 g of the FR-803P/APO-containing acrylic coating formulation is as follows.

Alberdingk 2523 (85.8 g) was added to a mixing vessel, followed by the addition of BYK 093 (1.6 g), BYK 346 (0.6 g), DISPERBYK 2010 (2.0 g) and Lopon 800 (1.0 g) under stirring at a rate of 500 rpm (using R 1303 dissolver stirrer IKA with EUROSTAR power control-vise motor, IKA).

The rotational speed was increased to 600 rpm and the aqueous suspension of FR-803P/Mg(OH)₂ of Preparation 7 (96 g) was added. The mixture was maintained under stirring to form a homogeneous formulation. Next, a water-based dispersion of antimony pentoxide (APO; 12.4 g of 48 % by weight aqueous dispersion of nano-sized Sb₂O₅; NYACOL A1550) was introduced to the vessel under stirring. Lastly, BYK 420 (0.6 g) was added. The mixture was stirred for additional 30 minutes at 500 rpm.

### Example 23 (comparative)

### Brominated polystyrene/Mg(OH)₂-containing acrylic coating formulation

An illustrative procedure for preparing 200 g of the FR-803P/Mg(OH)₂ containing acrylic coating formulation is as follows.

Alberdingk 2523 (98.2 g) was added to a mixing vessel, followed by the addition of BYK 093 (1.6 g), BYK 346 (0.6 g), DISPERBYK 2010 (2.0 g) and Lopon 800 (1.0 g) under stirring at a rate of 500 rpm (using R 1303 dissolver stirrer IKA with EUROSTAR power control-vise motor, IKA).

The rotational speed was increased to 600 rpm and the aqueous suspension of FR-803P/Mg (OH) 2 of Preparation 7 (96 g) was added. The mixture was maintained under stirring to form a homogeneous formulation. Lastly, BYK 420 (0.6 g) was added. The mixture was stirred for additional 30 minutes at 500 rpm.

### Example 24 (outside the scope of the invention)

### Cone calorimeter test to evaluate brominated polystyrene/Mg(OH)₂-containing acrylic coatings on flame retarded MDF wood samples

The coating formulations of Examples 21, 22 and 23 were applied on MDF wood samples and evaluated in a cone calorimeter.

### Preparation of the test specimen

18 mm thick, square shaped MDF samples (100 mm × 100 mm) were coated by the formulation of Examples 21, 22 and 23. The coatings were applied by a brush - three coats were formed; each coat was dried at room temperature for at least four hours before the application of the next coat. Then the samples were dried for at least a week prior to testing.

### Test procedure

Data was collected by a cone calorimeter [FTT iCone Classic Calorimeter manufactured by Fire Testing Technology, West Sussex, UK] under a heat flux of 50 kW/m² over 240 seconds. The specimens were tested without an edged frame sample holder exposing a surface area of 100 cm². The FR treated samples were tested in the horizontal orientation 25 mm from the heat source. The samples were wrapped in aluminum foil to prevent edge burning effects.

### Results

The compositions of the coating formulations that were tested are tabulated in Table 9 below, together with the results of the cone calorimeter test.

**Table 9**

| | Ex 21 FR-803P | Ex 22 FR-803P + APO + MDH | Ex 23 FR-803P + MDH |
|---|---|---|---|
| **Composition (% by weight)** | | | |
| Water-based acrylic resin (Alberdingk 2523 AC; ~ 47-49 % solids) | 55.6 | 42.9 | 49.1 |
| Aqueous suspension of FR-803P (Preparation 6: 26% FR-803P) | 42.2 (11 % FR-803P) | - | - |
| Aqueous suspension of FR-803P/MgOH₂ (Preparation 7: 21.7% FR-803P, 11% Mg(OH)₂) | - | 48.0 (10.4$ FR-803P + 5.3% Mg(OH)₂) | 48.0 (10.4$ FR-803P + 5.3% Mg(OH)₂) |
| Water-based Sb2O5 dispersion (NYACOL A1550; 48.0 % APO) | - | 6.2 (3% APO) | - |
| Dispersing and wetting agent (DISPERBYK 2010) | 0.7 | 1.0 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.3 | 0.3 |
| Dispersing agent (Lopon 800) | | 0.5 | 0.5 |

| **Cone calorimeter test** | | | |
|---|---|---|---|
| Peak heat release rate (kW/m²) | 323.2 | 257.7 | 266.6 |
| Average heat release rate (kW/m²) | 122.0 | 123.2 | 119.4 |
| Maximum average heat release rate (kw/m²) | 140.2 | 131.6 | 127.7 |

The results indicate that the antimony oxide-free coating of Example 23, based on brominated polystyrene/Mg(OH)₂, was comparable to the coating which was flame retarded by the ternary, antimony oxide containing combination consisting of brominated polystyrene/APO/Mg(OH)₂ (Example 22).

### Preparation 8 (comparative)

### Aqueous dispersion of FR-245

Water (168.8 g) was added to a mixing vessel, followed by addition of propylene glycol (111.8 g), DISPERBYK 2010 (8.4 g), BYK 093 (1.6 g) and Supragil WP (2.0 g) under stirring at a rate of 500 rpm (using R 1303 dissolver stirrer IKA with EUROSTAR power control-vise motor, IKA). Next, FR-245 (106.3 g) was added slowly to the mixture, which was maintained under stirring to form homogeneous suspension. Lastly, BYK 420 (1.2 g) was added slowly. Stirring was continued for additional 30 minutes at 500 ppm, to give 400 g of an aqueous dispersion of FR-245.

### Preparation 9 (outside the scope of the invention)

### Aqueous dispersion of FR-245 and Mg(OH)₂

Water (152.7 g) was added to a mixing vessel, followed by addition of propylene glycol (101.2 g), DISPERBYK 2010 (10.8 g) and BYK 093 (1.6 g) and Supragil WP (2.0 g) under stirring at a rate of 500 rpm (using R 1303 dissolver stirrer IKA with EUROSTAR power control-vise motor, IKA). Next, magnesium hydroxide (44 g of FR-20-100-S10 grade from ICL-IP) was introduced to the vessel under high shear rate at 14000 rpm (high shear disperser was T 25 digital ULTRA-TURRAX instrument, equipped with S 25 KV - 25F dispersing tool, from IKA).

FR-245 (86.9 g) was added slowly to the suspension, which was maintained under stirring (with the dissolver stirrer at 500 rpm) until homogeneous suspension was formed. Then BYK 420 (1.2 g) was added. Stirring continued for additional thirty minutes, to give 400 g of an aqueous dispersion of FR-245/Mg (OH) ₂.

### Example 25 (comparative)

### FR-245 -containing acrylic coating formulation

An illustrative procedure for preparing 200 g of the FR-245 containing acrylic coating formulation is as follows.

Alberdingk 2523 (111.1 g) was added to a mixing vessel, followed by the addition of BYK 093 (1.6 g), BYK 346 (0.6 g) and DISPERBYK 2010 (1.4 g) under stirring at a rate of 500 rpm (using R 1303 dissolver stirrer IKA with EUROSTAR power control-vise motor, IKA).

The rotational speed was increased to 600 rpm and the aqueous suspension of FR-245 of Preparation 8 (84.4 g) was added. The mixture was maintained under stirring to form a homogeneous formulation. Lastly, BYK 420 (1.0 g) was added. The mixture was maintained under stirring for 30 minutes at 500 rpm.

### Example 26 (comparative)

### FR-245/APO-containing acrylic coating formulation

An illustrative procedure for preparing 200 g of the FR-245/APO-containing acrylic coating formulation is as follows.

Alberdingk 2523 (98.72 g) was added to a mixing vessel, followed by the addition of BYK 093 (1.6 g), BYK 346 (0.6 g), DISPERBYK 2010 (1.4 g) under stirring at a rate of 500 rpm (using R 1303 dissolver stirrer IKA with EUROSTAR power control-vise motor, IKA).

The rotational speed was increased to 600 rpm and the aqueous suspension of FR-245 of Preparation 8 (84.4 g) was added. The mixture was maintained under stirring to form a homogeneous formulation. Next, a water-based dispersion of antimony pentoxide (APO; 12.4 g of 48 % by weight aqueous dispersion of nano-sized Sb₂O₅; NYACOL A1550) was introduced to the vessel under stirring. Lastly, BYK 420 (1.0 g) was added. The mixture was stirred for additional 30 minutes at 500 rpm.

### Example 27 (outside the scope of the invention)

### FR-245/Mg (OH) 2-containing acrylic coating formulation

An illustrative procedure for preparing 200 g of the FR- 245/Mg(OH)2 containing acrylic coating formulation is as follows.

Alberdingk 2523 (98.2 g) was added to a mixing vessel, followed by the addition of BYK 093 (1.6 g), BYK 346 (0.6 g), DISPERBYK 2010 (2.0 g) and Lopon 800 (1.0 g) under stirring at a rate of 500 rpm (using R 1303 dissolver stirrer IKA with EUROSTAR power control-vise motor, IKA).

The rotational speed was increased to 600 rpm and the aqueous suspension of FR-245/Mg (OH) 2 of Preparation 9 (96 g) was added. The mixture was maintained under stirring to form a homogeneous formulation. Lastly, BYK 420 (0.6 g) was added. The mixture was stirred for additional 30 minutes at 500 rpm.

### Example 28 (outside the scope of the invention)

### Cone calorimeter test to evaluate FR-245/Mg(OH)₂-containing acrylic coatings on flame retarded MDF wood samples

The coating formulations of Examples 25, 26 and 27 were applied on MDF wood samples and evaluated in a cone calorimeter.

### Preparation of the test specimen

18 mm thick, square shaped MDF samples (100 mm x 100 mm) were coated by the formulation of Examples 25, 26 and 27. The coatings were applied by a brush - three coats (of the same formulation) were formed; each coat was dried at room temperature for at least four hours before the application of the next coat. Then the samples were dried for at least a week prior to testing.

### Test procedure

Data was collected by a cone calorimeter [FTT iCone Classic Calorimeter manufactured by Fire Testing Technology, West Sussex, UK] under a heat flux of 50 kW/m² over 240 seconds. The specimens were tested without an edged frame sample holder exposing a surface area of 100 cm². The FR treated samples were tested in the horizontal orientation 25 mm from the heat source. The samples were wrapped in aluminum foil to prevent edge burning effects.

### Results

The compositions of the coating formulations that were tested are tabulated in Table 10 below, together with the results of the cone calorimeter test.

**Table 10**

| | Ex 25 FR-245 | Ex 26 FR-245 + APO | Ex 27 FR-245 + MDH |
|---|---|---|---|
| **Composition (% by weight)** | | | |
| Water-based acrylic resin (Alberdingk 2523 AC; ∼ 47-49 % solids) | 55.6 | 49.36 | 49.1 |
| Aqueous suspension of FR-245 (Preparation 8: 26.5% FR-245) | 42.2 (11 % FR-245) | 42.2 (11 % FR-245) | - |
| Aqueous suspension of FR-245/MgOH₂ (Preparation 9: 21.7% FR-245, 11% Mg(OH)₂) | - | - | 48.0 (10.4% FR-245 + 5.3% Mg(OH)₂) |
| Water-based Sb2O5 dispersion (NYACOL A1550; 48.0 % APO) | - | 6.2 (3% APO) | - |
| Dispersing and wetting agent (DISPERBYK 2010) | 0.7 | 0.7 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.5 | 0.3 |
| Dispersing agent (Lopon 800) | | | 0.5 |

| **Cone calorimeter test** | | | |
|---|---|---|---|
| Peak heat release rate (kW/m²) | 349.6 | 359.0 | 276.5 |
| Average heat release rate (kW/m²) | 126.8 | 120.0 | 122.4 |
| Maximum average heat release rate (kw/m² ) | 140.0 | 139.8 | 135.4 |

The results indicate that magnesium hydroxide can replace antimony oxide in FR-245 based coatings, to provide coatings showing comparable, and perhaps even reduced, flammability.

### Example 29 (comparative)

### Cone calorimeter test to evaluate DPDPE/Mg(OH)₂-containing acrylic coatings on MDF samples

The goal of the study was to examine the efficiency of Mg(OH)₂ as a replacement for APO in acrylic coatings which are flame retarded by a brominated compound, i.e., nonpolymeric flame retardant. The brominated compound chosen for the study was decabromodiphenyl ethane (DPDPE), a strong flame retardant with an exceptionally high (-80%) bromine content:

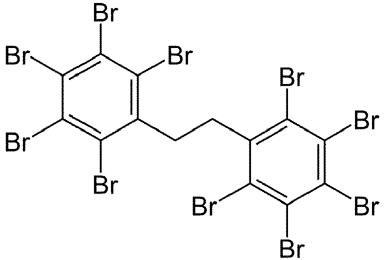

Aqueous suspensions of DPDPE and DPDPE/Mg(OH)₂ were prepared using the procedures set out in Preparations 4 and 5. The compositions (% by weight) are set out below.

**Table 11**

| | Preparation 10 DPDPE in water | Preparation 11 DPDPE/Mg(OH)₂ in water |
|---|---|---|
| Water | 42.21 | 38.37 |
| Propylene glycol | 27.94 | 25.3 |
| Dispersing and wetting agent (DISPERBYK 2010) | 2.09 | 2.7 |
| Defoamer (BYK 093) | 0.4 | 0.4 |
| Anionic surfactant (Supragil WP) | 0.5 | 0.5 |
| DPDPE (FR 1410) | 26.56 | 21.73 |
| Rheology additive (BYK 420) | 0.3 | - |
| Mg(OH)₂ | - | 11 |

Next, coating formulations were prepared and tested in cone calorimeter (see preparation procedures described in Examples 17-19, and test protocol in Example 20).

The compositions of the coating formulations that were tested are tabulated in Table 12 below, together with the results of the cone calorimeter test.

**Table 12**

| | Ex 29A DPDPE | Ex 29B DPDPE + APO | Ex 29C DPDPE + MDH |
|---|---|---|---|
| **Composition (% by weight)** | | | |
| Water-based acrylic resin (Alberdingk 2523 AC; ∼ 47-49 % solids) | 55.56 | 49.36 | 49.1 |
| Aqueous suspension of DPDPE (Preparation 10: 26.6 % FR-1410) | 42.2 (11.2% DPDPE) | 42.2 (11.2% DPDPE) | - |
| Aqueous suspension of DPDPE/Mg(OH)₂ (Preparation 11: 21.7% FR-1410 + 11% Mg(OH)₂) | - | - | 48 (10.4% DPDPE +5.3 % Mg(OH)2) |
| Water-based Sb2O5 dispersion (NYACOL A1550; 48.0 % APO) | | 6.2 (3% APO) | |
| Dispersing and wetting agent (DISPERBYK 2010) | 0.7 | 0.7 | 1.0 |
| Substrate wetting agent (BYK 346) | 0.3 | 0.3 | 0.3 |
| Defoamer (BYK 093) | 0.8 | 0.8 | 0.8 |
| Rheology additive (BYK 420) | 0.5 | 0.5 | 0.3 |
| Dispersing agent (Lopon 800) | | | 0.5 |

| **Cone calorimeter test** | | | |
|---|---|---|---|
| Peak heat release rate (kW/m²) | 290 | 260 | 273 |
| Average heat release rate (kW/m²) | 105.8 | 99.2 | 100.5 |
| Maximum average rate of heat emission (kw/m² ) | 125.9 | 119.4 | 121.7 |

APO and Mg(OH)₂ both improve the action of DPDPE in the coating formulations, reducing HRR parameters. However, the combination of DPDPE/APO was shown to be slightly more efficient than DPDPE/Mg(OH)₂.

## Claims

1. Flame retardant coating formulation in the form of an aqueous dispersion comprising a binder, particles of a brominated polymeric flame retardant (BFR); and particles of at least one of magnesium hydroxide and aluminum trihydrate, wherein the aqueous dispersion is substantially free of antimony oxide so that the concentration of antimony oxide in the aqueous dispersion is not more than 3% by weight, more preferably less than 1.0 % by weight, and even more preferably from 0.0 to 0.09 % by weight based on the total weight of the formulation; and wherein the brominated polymeric flame retardant is selected from tribromophenol end-capped brominated epoxy polymer of the formula Ia: 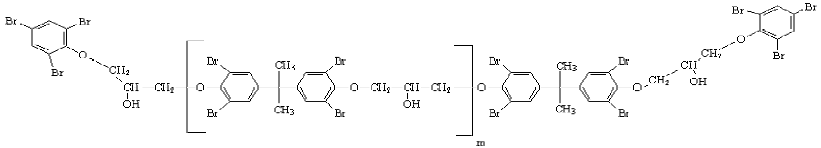 wherein m is the degree of polymerization; and brominated poly[styrene-co-butadiene].

2. The flame retardant coating formulation according to claim 1, wherein the binder is an acrylate resin or a polyurethane resin.

3. The flame retardant coating formulation according to claim 1 or 2, comprising magnesium hydroxide.

4. The Flame retardant coating formulation according to claim 3, comprising:
from 10 to 50 % by weight of water;
from 10 to 35 % by weight of acrylate resin;
from 5 to 25 % by weight of tribromophenol end-capped brominated epoxy polymer of the formula Ia; and
from 2 to 10 % by weight of Mg(OH)₂.

5. The flame retardant coating formulation according to claim 3, comprising:
from 10 to 50 % by weight of water;
from 10 to 35 % by weight of acrylate resin;
from 5 to 25 % by weight of brominated poly[styrene-co-butadiene]; and
from 2 to 10 % by weight of Mg(OH)₂.

6. The flame retardant coating formulation according to any one of claims 1 to 5, further comprising one or more of additives selected from dispersants, wetting agents, coalescing agents, defoamers, substrate wetting agents and rheology modifiers.

7. The flame retardant coating formulation according to claim 6, comprising a combination of nonionic dispersant and anionic dispersant.

8. The flame retardant coating formulation according to claim 7, wherein the anionic dispersant is polyacrylate or polyphosphate salt.

9. The flame retardant coating formulation according to claim 8, wherein the anionic dispersant is polyacrylate sodium salt.

10. The flame retardant coating formulation according to any one of claim 2 to 9, wherein the acrylic resin is self-crosslinking acrylic resin.

11. The flame retardant coating formulation according to any one of claims 2, 3 and 6 to 9, wherein the polyurethane resin is an aliphatic polyester polyurethane.

12. The flame retardant coating formulation according to any one of claims 1 to 11, which is free of antimony oxide.

13. A process for preparing a flame retardant coating formulation for wood according to any one of claims 1 to 12, comprising incorporating magnesium hydroxide powder or alumina trihydrate powder, and brominated polymeric flame retardant (BFR) powder, into a water-based binder dispersion.

14. The process according to claim 13, wherein the binder is an acrylate resin or a polyurethane resin.

15. The process for preparing flame retardant coating formulation according to claim 13 or 14, comprising the steps of:
1a) adding magnesium hydroxide powder to water in the presence of a dispersant and optionally a wetting agent under high shear of not less than 10,000 revolutions per minute (rpm), to form Mg(OH)₂ aqueous dispersion;
1b) adding BFR powder to the Mg(OH)₂ aqueous dispersion, to form BFR/Mg(OH)₂ aqueous dispersion;
2) combining the BFR/Mg(OH)₂ aqueous dispersion with water-based acrylic resin to form the flame retardant coating formulation;
wherein the process further comprises incorporating one or more of dispersants, wetting agents, coalescing agents, defoamers, substrate wetting agents and rheology modifiers into the Mg(OH)₂ aqueous dispersion, the BFR/Mg(OH)₂ aqueous dispersion, the water-based acrylic resin and/or the flame retardant coating formulation.

16. The process according to any one of claims 13 to 15, wherein the magnesium hydroxide powder possesses particle size distribution of d₅₀≤3 µm and d₉₀≤ 6 µm; and the BFR powder possesses particle size distribution of d₅₀<5 µm and d₉₀< 10 pm, measured by laser diffraction.

17. The process according to any one of claims 15 to 16, comprising adding nonionic dispersant to the water in step 1a and/or to the water based acrylic resin in step 2, and anionic dispersant to the water- based acrylic resin in step 2.

18. A method of reducing the flammability of wood and wood products, comprising applying the flame retardant aqueous dispersion of any one of claims 1 to 12 to the surface of the wood or the wood product, to form a coating thereon.

## Patentansprüche

1. Flammhemmende Beschichtungsformulierung in Form einer wässrigen Dispersion, umfassend ein Bindemittel, Partikel eines bromierten polymeren Flammschutzmittels (BFR); und Partikel von mindestens einem von Magnesiumhydroxid und Aluminiumtrihydrat, wobei die wässrige Dispersion im Wesentlichen frei von Antimonoxid ist, sodass die Konzentration von Antimonoxid in der wässrigen Dispersion nicht mehr als 3 Gew.-%, bevorzugter weniger als 1,0 Gew.-% und noch bevorzugter von 0,0 bis 0,09 Gew.-% basierend auf dem Gesamtgewicht der Formulierung beträgt; und wobei das bromierte polymere Flammschutzmittel ausgewählt ist aus tribromphenolendverkapptem bromiertem Epoxidpolymer der Formel Ia: 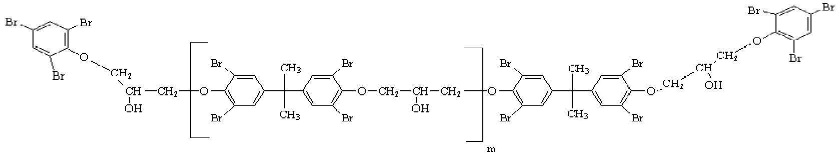 wobei m der Polymerisationsgrad ist; und bromiertes Poly[styrol-co-butadien].

2. Flammhemmende Beschichtungsformulierung nach Anspruch 1, wobei das Bindemittel ein Acrylatharz oder ein Polyurethanharz ist.

3. Flammhemmende Beschichtungsformulierung nach Anspruch 1 oder 2, umfassend Magnesiumhydroxid.

4. Flammhemmende Beschichtungsformulierung nach Anspruch 3, umfassend:
von 10 bis 50 Gew.-% Wasser;
von 10 bis 35 Gew.-% Acrylatharz;
5 bis 25 Gew.-% Tribromphenol-Endgruppen aufweisendes bromiertes Epoxidpolymer der Formel Ia; und
von 2 bis 10 Gew.-% Mg(OH)₂.

5. Flammhemmende Beschichtungsformulierung nach Anspruch 3, umfassend:
von 10 bis 50 Gew.-% Wasser;
von 10 bis 35 Gew.-% Acrylatharz;
5 bis 25 Gew.-% bromiertes Poly[styrol-co-butadien]; und von 2 bis 10 Gew.-% Mg(OH)₂.

6. Flammhemmende Beschichtungsformulierung nach einem der Ansprüche 1 bis 5, ferner umfassend ein oder mehrere Additive, ausgewählt aus Dispergiermitteln, Benetzungsmitteln, Koaleszenzmitteln, Entschäumern, Substratbenetzungsmitteln und Rheologiemodifikatoren.

7. Flammhemmende Beschichtungsformulierung nach Anspruch 6, umfassend eine Kombination aus nichtionischem Dispergiermittel und anionischem Dispergiermittel.

8. Flammhemmende Beschichtungsformulierung nach Anspruch 7, wobei das anionische Dispergiermittel ein Polyacrylat- oder Polyphosphatsalz ist.

9. Flammhemmende Beschichtungsformulierung nach Anspruch 8, wobei das anionische Dispergiermittel ein Polyacrylatnatriumsalz ist.

10. Flammhemmende Beschichtungsformulierung nach einem der Ansprüche 2 bis 9, wobei das Acrylharz ein selbstvernetzendes Acrylharz ist.

11. Flammhemmende Beschichtungsformulierung nach einem der Ansprüche 2, 3 und 6 bis 9, wobei das Polyurethanharz ein aliphatisches Polyesterpolyurethan ist.

12. Flammhemmende Beschichtungsformulierung nach einem der Ansprüche 1 bis 11, die frei von Antimonoxid ist.

13. Prozess zur Vorbereitung einer flammhemmenden Beschichtungsformulierung für Holz nach einem der Ansprüche 1 bis 12, umfassend die Einarbeitung von Magnesiumhydroxidpulver oder Aluminiumoxidtrihydratpulver und bromiertem polymerem Flammschutzmittel (BFR) in eine Bindemitteldispersion auf Wasserbasis.

14. Prozess nach Anspruch 13, wobei das Bindemittel ein Acrylatharz oder ein Polyurethanharz ist.

15. Prozess zur Vorbereitung einer flammhemmenden Beschichtungsformulierung nach Anspruch 13 oder 14, umfassend die folgenden Schritte:
1a) Hinzufügen von Magnesiumhydroxidpulver zu Wasser in Gegenwart eines Dispergiermittels und optional eines Benetzungsmittels unter hoher Scherung von nicht weniger als 10.000 Umdrehungen pro Minute (U/min), um eine wässrige Mg(OH)₂-Dispersion zu bilden;
1b) Hinzufügen von BFR-Pulver zu der wässrigen Mg(OH)₂-Dispersion, um eine wässrige BFR/Mg(OH)₂-Dispersion zu bilden;
2) Kombinieren der wässrigen BFR/Mg(OH)₂-Dispersion mit Acrylharz auf Wasserbasis, um die flammhemmende Beschichtungsformulierung zu bilden;
wobei der Prozess ferner die Einarbeitung eines oder mehrerer Dispergiermittel, Benetzungsmittel, Koaleszenzmittel, Entschäumer, Substratbenetzungsmittel und Rheologiemodifikatoren in die wässrige Mg(OH)₂-Dispersion, die wässrige BFR/Mg(OH)₂-Dispersion, das Acrylharz auf Wasserbasis und/oder die flammhemmende Beschichtungsformulierung umfasst.

16. Prozess nach einem der Ansprüche 13 bis 15, wobei das Magnesiumhydroxidpulver eine Partikelgrößenverteilung von d₅₀≤3 µm und d₉₀≤ 6 µm besitzt; und das BFR-Pulver eine Partikelgrößenverteilung von d₅₀<5 µm und d₉₀< 10 pm, gemessen durch Laserbeugung, besitzt.

17. Prozess nach einem der Ansprüche 15 bis 16, umfassend das Hinzufügen von nichtionischem Dispergiermittel zu dem Wasser in Schritt 1a und/oder zu dem Acrylharz auf Wasserbasis in Schritt 2 und von anionischem Dispergiermittel zu dem Acrylharz auf Wasserbasis in Schritt 2.

18. Verfahren zum Verringern der Entflammbarkeit von Holz und Holzprodukten, umfassend das Auftragen der flammhemmenden wässrigen Dispersion nach einem der Ansprüche 1 bis 12 auf die Oberfläche des Holzes oder des Holzproduktes, um darauf eine Beschichtung zu bilden.

## Revendications

1. Formulation de revêtement ignifuge sous la forme d'une dispersion aqueuse comprenant un liant, des particules d'un agent ignifuge polymère bromé (BFR) ; et des particules d'au moins l'un parmi de l'hydroxyde de magnésium et du trihydrate d'aluminium, dans laquelle la dispersion aqueuse est sensiblement exempte d'oxyde d'antimoine, de sorte que la concentration d'oxyde d'antimoine dans la dispersion aqueuse n'est pas supérieure à 3 % en poids, de préférence est inférieure à 1,0 % en poids, et encore plus préférablement est de 0,0 à 0,09 % en poids sur la base du poids total de la formulation ; et dans laquelle l'agent ignifuge polymère bromé est choisi parmi un polymère époxy bromé coiffé aux extrémités de tribromophénol de formule la : 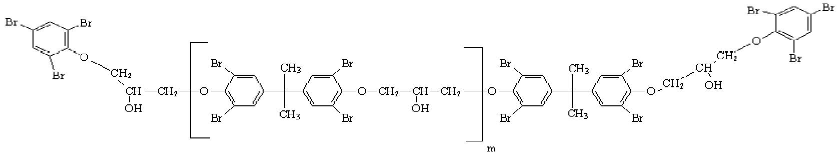 dans laquelle m est le degré de polymérisation ; et un poly[styrène-co-butadiène] bromé.

2. Formulation de revêtement ignifuge selon la revendication 1, dans laquelle le liant est une résine acrylate ou une résine polyuréthane.

3. Formulation de revêtement ignifuge selon la revendication 1 ou 2, comprenant de l'hydroxyde de magnésium.

4. Formulation de revêtement ignifuge selon la revendication 3, comprenant :
de 10 à 50 % en poids d'eau ;
de 10 à 35 % en poids de résine acrylate ;
de 5 à 25 % en poids de polymère époxy bromé coiffé aux extrémités de tribromophénol de formule la ; et
de 2 à 10 % en poids de Mg(OH)₂.

5. Formulation de revêtement ignifuge selon la revendication 3, comprenant :
de 10 à 50 % en poids d'eau ;
de 10 à 35 % en poids de résine acrylate ;
de 5 à 25 % en poids de poly[styrène-co-butadiène] bromé ; et
de 2 à 10 % en poids de Mg(OH)₂.

6. Formulation de revêtement ignifuge selon l'une quelconque des revendications 1 à 5, comprenant en outre un ou plusieurs additifs choisis parmi des dispersants, agents mouillants, agents coalescents, antimousses, agents mouillants de substrat et modificateurs de rhéologie.

7. Formulation de revêtement ignifuge selon la revendication 6, comprenant une combinaison de dispersant non ionique et de dispersant anionique.

8. Formulation de revêtement ignifuge selon la revendication 7, dans laquelle le dispersant anionique est un sel de polyacrylate ou de polyphosphate.

9. Formulation de revêtement ignifuge selon la revendication 8, dans laquelle le dispersant anionique est un sel de polyacrylate sodium.

10. Formulation de revêtement ignifuge selon l'une quelconque des revendications 2 à 9, dans laquelle la résine acrylique est une résine acrylique auto-réticulante.

11. Formulation de revêtement ignifuge selon l'une quelconque des revendications 2, 3 et 6 à 9, dans laquelle la résine polyuréthane est un polyuréthane de polyester aliphatique.

12. Formulation de revêtement ignifuge selon l'une quelconque des revendications 1 à 11, qui est exempte d'oxyde d'antimoine.

13. Procédé de préparation d'une formulation de revêtement ignifuge pour du bois selon l'une quelconque des revendications 1 à 12, comprenant l'incorporation de poudre d'hydroxyde de magnésium ou de poudre de trihydrate d'alumine, et de poudre d'agent ignifuge polymère bromée (BFR), dans une dispersion de liant à base d'eau.

14. Procédé selon la revendication 13, dans lequel le liant est une résine acrylate ou une résine polyuréthane.

15. Procédé de préparation d'une formulation de revêtement ignifuge selon la revendication 13 ou 14, comprenant les étapes consistant à :
1a) ajouter une poudre d'hydroxyde de magnésium à de l'eau en présence d'un dispersant et facultativement un agent mouillant sous un cisaillement élevé d'au moins 10 000 tours par minute (tr/min), pour former une dispersion aqueuse de Mg(OH)₂ ;
1b) ajouter une poudre de BFR à la dispersion aqueuse de Mg(OH)₂, pour former une dispersion aqueuse de BFR/Mg(OH)₂ ;
2) combiner la dispersion aqueuse de BFR/Mg(OH)₂ avec une résine acrylique à base d'eau pour former la formulation de revêtement ignifuge ;
dans lequel le procédé comprend en outre l'incorporation d'un ou plusieurs agents parmi des dispersants, agents mouillants, agents coalescents, antimousses, agents mouillants de substrat et modificateurs de rhéologie dans la dispersion aqueuse de Mg(OH)₂, la dispersion aqueuse de BFR/Mg(OH)₂, la résine acrylique à base d'eau et/ou la formulation de revêtement ignifuge.

16. Procédé selon l'une quelconque des revendications 13 à 15, dans lequel la poudre d'hydroxyde de magnésium possède une distribution granulométrique de d₅₀ ≤ 3 um et d₉₀ ≤ 6 um ; et la poudre de BFR possède une distribution granulométrique de d₅₀ < 5 um et d₉₀ < 10 um, mesurées par diffraction laser.

17. Procédé selon l'une quelconque des revendications 15 à 16, comprenant l'ajout d'un dispersant non ionique à l'eau à l'étape 1a et/ou à la résine acrylique à base d'eau à l'étape 2, et d'un dispersant anionique à la résine acrylique à base d'eau à l'étape 2.

18. Procédé de réduction de l'inflammabilité du bois et de produits à base de bois, comprenant l'application de la dispersion aqueuse ignifuge de l'une quelconque des revendications 1 à 12 à la surface du bois ou du produit à base de bois, afin de former un revêtement sur celle-ci .
